(19) Europäisches Patentamt
European Patent Office
Office européen des brevets

(11) **EP 4 379 603 A1**

(12) **EUROPEAN PATENT APPLICATION**
published in accordance with Art. 153(4) EPC

(43) Date of publication:
**05.06.2024 Bulletin 2024/23**

(21) Application number: **22857922.3**

(22) Date of filing: **19.08.2022**

(51) International Patent Classification (IPC):
**G06N 3/02** (2006.01)     **G06N 3/04** (2023.01)
**G06N 3/08** (2023.01)

(86) International application number:
**PCT/CN2022/113602**

(87) International publication number:
**WO 2023/020613 (23.02.2023 Gazette 2023/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.08.2021 CN 202110962700**

(71) Applicant: **Huawei Technologies Co., Ltd.
Shenzhen, Guangdong 518129 (CN)**

(72) Inventors:
• HOU, Lu
  Shenzhen, Guangdong 518129 (CN)
• BAI, Haoli
  Shenzhen, Guangdong 518129 (CN)
• SHANG, Lifeng
  Shenzhen, Guangdong 518129 (CN)
• JIANG, Xin
  Shenzhen, Guangdong 518129 (CN)
• QIAN, Li
  Shenzhen, Guangdong 518129 (CN)

(74) Representative: **Thun, Clemens
  Mitscherlich PartmbB
  Patent- und Rechtsanwälte
  Karlstraße 7
  80333 München (DE)**

(54) **MODEL DISTILLATION METHOD AND RELATED DEVICE**

(57)     This application relates to the field of artificial intelligence, and discloses a model distillation method, including: distilling a student model at a first computing node in a computing node cluster by using a partial model of the student model and a partial model of a teacher model, and performing a gradient back propagation process of distillation inside the first computing node, without dependency on another computing node to complete distillation of a network layer for which the first computing node is responsible, to achieve higher utilization of computing resources, and accelerate a distillation process.

FIG. 11

## Description

This application claims priority to Chinese Patent Application No. 202110962700.9, filed with the China National Intellectual Property Administration on August 20, 2021 and entitled "MODEL DISTILLATION METHOD AND RELATED DEVICE", which is incorporated herein by reference in its entirety.

## TECHNICAL FIELD

This application relates to the field of artificial intelligence, and in particular, to a model distillation method and a related device.

## BACKGROUND

Artificial intelligence (artificial intelligence, AI) is a theory, a method, a technology, and an application system in which human intelligence is simulated and extended by using a digital computer or a machine controlled by a digital computer, to perceive an environment, obtain knowledge, and achieve an optimal result by using the knowledge. That is, artificial intelligence is a branch of computer science, and is intended to understand essence of intelligence and produce a new intelligent machine that can respond in a manner similar to human intelligence. Artificial intelligence is to study design principles and implementation methods of various intelligent machines, so that the machines have functions of perception, inference, and decision-making.

With continuous development of artificial intelligence technologies, a natural language man-machine interaction system that enables man-machine interaction to be performed by using a natural language becomes increasingly important. To perform man-machine interaction by using the natural language, the system needs to recognize a specific meaning of the human natural language. Usually, the system extracts key information from a sentence in the natural language to recognize a specific meaning of the sentence.

A transformer structure has a powerful semantic expression capability, and can capture a long-range dependency in text. Since the transformer structure is proposed, the transformer structure significantly outperforms previous models in a series of natural language processing tasks represented by translation. A pre-trained language model based on the transformer structure has also achieved a very good effect in fields such as a question answering system and a voice assistant.

However, a transformer model has many parameters, which poses a great challenge to inference on a cloud or terminal side that has requirements on a latency and precision. Therefore, in some studies, some methods, for example, pruning and quantization, for performing parallel compression on the transformer model by using distributed computing nodes are proposed, and need to be combined with knowledge distillation to obtain a good result. In an existing gradient back propagation process of knowledge distillation, update is gradually performed from an output layer to an input layer, and update of a previous network layer depends on completion of update of a current level of network layer. Therefore, when update of a network layer of one or more current levels of computing nodes is not completed, a large quantity of computing nodes are in a resource idle state, resulting in a long training time.

## SUMMARY

In an existing distributed distillation method, each computing node needs to depend on a gradient back propagation result of a subsequent computing node to update a model, and consequently a large quantity of computing nodes are in a resource idle state. This application provides a model distillation method in which a gradient back propagation process of each computing node is internally performed, there is no dependency on a subsequent computing node to complete distillation of a network layer for which each computing node is responsible, and a gradient calculated by each computing node is not back-propagated to a previous level of computing node, to achieve higher utilization of computing resources, and accelerate a distillation process.

According to a first aspect, this application provides a model distillation method. The method is applied to a first computing node. The first computing node is included in a computing node cluster, and the computing node cluster may perform knowledge distillation on a student model based on a teacher model. Each computing node may be responsible for distillation of a part of the student model, and all the computing nodes may coordinate with each other to distill the student model. The computing node cluster may include a plurality of computing nodes connected in series. The plurality of computing nodes connected in series may include the first computing node and a second computing node. The first computing node and the second computing node are communicatively connected.

The computing node (for example, the first computing node or the second computing node) may be a terminal device such as a mobile phone, a tablet computer, a notebook computer, or a smart wearable device, or may be a device having a data processing capability, for example, a server or a chip. This is not limited herein.

A first sub-model and a second sub-model may be deployed on the first computing node. The first sub-model is a partial model of the student model, and the student model further includes a third sub-model connected to the first sub-model. The second sub-model is a partial model of the teacher model, and the teacher model further includes a fourth sub-model connected to the second sub-model. The first computing node is communicatively connected to the second computing node. The third sub-model and the fourth sub-model are deployed on the second computing node.

In the student model, the third sub-model is connected before the first sub-model. In the teacher model, the fourth sub-model is connected before the second sub-model.

That "the third sub-model is connected before the first sub-model" herein may be understood as that the third sub-model is closer to an input layer in the student model than the first sub-model, that is, the first sub-model is closer to an output layer in the student model than the third sub-model, that is, an output of the third sub-model is used as an input to the first sub-model.

That "the fourth sub-model is connected before the second sub-model" herein may be understood as that the fourth sub-model is closer to an input layer in the teacher model than the second sub-model, that is, the second sub-model is closer to an output layer in the teacher model than the fourth sub-model, that is, an output of the fourth sub-model is used as an input to the second sub-model.

The method includes:

First input data and second input data from the second computing node are obtained. The first input data is output data of the third sub-model, and the second input data is output data processed by the fourth sub-model. The first input data may be an output obtained by the second computing node by processing data by using the third sub-model, and the second input data may be an output obtained by the second computing node by processing data by using the fourth sub-model.

The student model may be obtained by compressing the teacher model. For example, the student model may be obtained by pruning the teacher model. For example, the student model may be obtained by quantizing the teacher model.

When knowledge distillation is performed on the student model based on the teacher model, there may be a feedforward process and a gradient back propagation process each time iterative training is performed. The feedforward process is a process of processing a training sample by using the student model and the teacher model. The teacher model and the student model in this embodiment of this application each are divided into a plurality of modules for which different computing nodes are respectively responsible. Therefore, each computing node may obtain a calculation result of a previous level of connected computing node (the first computing node may obtain the training sample), perform an operation on the calculation result of the previous level of connected computing node based on a module for which each computing node is responsible, and transfer the calculation result to a next level of connected computing node. In addition, a serial connection sequence of the computing nodes is consistent with an arrangement of network layers in the model. Therefore, from an overall perspective of the plurality of nodes, the feedforward process is still equivalent to a process of processing a training sample by using a complete student model and a complete teacher model.

In this embodiment of this application, each computing node is configured to perform feedforward (or referred to as forward propagation) based on a partial network for which the computing node is responsible, to obtain output data. Each computing node may implement flowing of the output data based on a serial sequence. The first computing node and the second computing node are used as an example. In a feedforward process, the second computing node may process third input data by using the third sub-model, to obtain the first input data, and the first input data may be used as an input to the first sub-model. In this way, the first computing node may obtain the first input data. Similarly, the second computing node may process fourth input data by using the fourth sub-model, to obtain the second input data, and the second input data may be used as an input to the second sub-model. In this way, the first computing node may obtain the second input data.

The first input data is processed by using the first sub-model, to obtain a first intermediate output.

The second input data is processed by using the second sub-model, to obtain a second intermediate output. The first intermediate output and the second intermediate output are used to determine a first gradient.

For the student model (the first sub-model) for which the first computing node is responsible, the first input data may be processed by using the first sub-model, to obtain the first intermediate output. For the teacher model (the second sub-model) for which the first computing node is responsible, the second input data may be processed by using the second sub-model, to obtain the second intermediate output.

In a possible implementation, the first sub-model and the second sub-model each may include a plurality of network layers (for example, a plurality of transformer layers), the first intermediate output may be an output of a last layer (namely, a network layer closest to the output layer in the student model) in the first sub-model, and correspondingly, the second intermediate output may be an output of a last layer (namely, a network layer closest to an output layer in the teacher model) in the second sub-model. In a possible implementation, the first intermediate output may alternatively be an output of each layer in the first sub-model, and correspondingly, the second intermediate output may be an output of each layer in the second sub-model.

The first sub-model is distilled based on the first gradient, to obtain an updated first sub-model.

In an existing gradient back propagation process of knowledge distillation, update is gradually performed from an output layer to an input layer, and update of a previous level of network layer depends on completion of update of a current level of network layer. Therefore, when update of a network layer of one or more current levels of computing nodes is not completed, a large quantity of computing nodes are in a resource idle state. For example, a computing node 1 is responsible for distillation of a network layer 1, a computing node 2 is responsible for distillation of a network layer 2, and the network layer 2 is connected after the network layer 1. In a feedforward process, an output of the network layer 1 is used as an input of the network layer 2. During gradient back propagation, the network layer 1 is updated only after the network layer 2 is updated. That is, before the computing node 2 completes update of the network layer 2, the computing node 1 cannot update the network layer 1. In this embodiment of this application, a gradient back propagation process of each computing node is internally performed, there is no dependency on one next level of computing node (or N next levels of computing nodes, where N is greater than 1) to complete distillation of a network layer for which each computing node is responsible, and a gradient calculated by each computing node is not back-propagated to a previous level of computing node (for the first gradient obtained by the first computing node, the first gradient is used only to update the first sub-model, and may not be back-propagated to the second computing node, that is, is not used when the second computing node distills a network layer for which the second computing node is responsible), to achieve higher utilization of computing resources, and accelerate a distillation process.

It should be understood that in the asynchronous parallel training process described above, an error generated by the student model is propagated layer by layer (propagated during feedforward). During parallel training, if training of a previous segment is not completed, a current segment is affected by the previous segment. In addition, a queue is used, so that computing nodes may not need to wait for each other. However, non-sequential calculation brings a larger error to the model than common pipeline parallel training. Therefore, in an implementation, the teacher model may be used to mitigate error accumulation caused by the student model. Specifically, when distillation training starts, input data obtained by the computing node may be an output of a teacher model of a previous level of connected computing node (when distillation starts, an error of the student model is excessively large, and an input to the teacher model is more accurate. In this embodiment of this application, the error is propagated layer by layer, and therefore a convergence speed of the student model is very low. At the beginning, the output of the teacher model is used as an input, so that error propagation during feedforward can be reduced, and the convergence speed of the student model can be increased). As the training proceeds, a change is gradually made to use a sample of an output queue of the student model as an input, to maintain consistency with an inference phase (only the student model is used).

In a possible implementation, the student model and the teacher model are transformer models, and the first sub-model and the second sub-model each include one or more transformer layers.

In a possible implementation, the first sub-model does not include the output layer in the student model, and correspondingly, the second sub-model does not include the output layer in the teacher model. When the first sub-model includes the output layer in the student model, and the second sub-model includes the output layer in the teacher model, the first computing node does not need to wait for gradient back propagation of a next level of computing node (the first computing node is a last level of computing node).

In a possible implementation, the first gradient is used only to update the first sub-model. For the first gradient obtained by the first computing node, the first gradient is used only to update the first sub-model, and may not be back-propagated to the second computing node, that is, is not used when the second computing node distills a network layer for which the second computing node is responsible, to achieve higher utilization of computing resources, and accelerate a distillation process.

In an actual application, times for all the computing nodes to perform feedforward processes of network layers for which the computing nodes are responsible are not uniform. To further reduce a waiting time between different computing nodes, during forward propagation, a current computing node does not wait for a previous computing node to complete calculation before starting calculation.

In a possible implementation, an output queue I may be deployed between adjacent computing nodes (for example, an $n^{th}$ computing node and an $(n+1)^{th}$ computing node) to collect outputs of the $n^{th}$ computing node in latest $t_0$ steps. The output queue may have a preset memory size, and is updated by following first in first out (first input first output, FIFO). The $(n+1)^{th}$ computing node can always obtain data from the output queue as an input of the computing node without waiting. Such a design can avoid a problem of load imbalance from a laggard module, and implement a linear acceleration ratio that is close to a theoretical ratio of N-fold acceleration implemented by using N training devices.

For example, the $n^{th}$ computing node is the second computing node, and the $(n+1)^{tn}$ computing node is the first computing node. A first queue (for the student model) may be deployed between the second computing node and the first computing node. The second computing node may store output data (including the first input data) in the first queue. In this way, the first computing node may obtain the first input data from the first queue. The first queue is used to store at least one piece of first data from the second computing node. Each piece of first data is an output obtained by the second computing node by processing data by using the third sub-model.

In a possible implementation, the first computing node is further communicatively connected to a third computing node, a third queue may be deployed (for example, deployed at a storage position between the first computing node and the third computing node, deployed on the first computing node, or deployed on the third computing node), and the student model further includes a fifth sub-model connected after the first sub-model. After the first computing node processes the first input data by using the first sub-model, the first intermediate output obtained through processing may be stored in the third queue (an execution body of the storage action is not limited to the first computing node), that is, the first intermediate output may be transferred to the third queue, and the third queue is used to store the first intermediate output, so that the third computing node obtains the first intermediate output from the third queue. The first intermediate output is used as input data in a feedforward process existing when model distillation is performed on the third sub-model.

There is no dependency between distillation processes of all the computing nodes. Therefore, after completing an update process of gradient back propagation, the computing node may directly obtain a next piece of input data and perform feedforward without waiting, and does not need to wait for completion of a feedforward process of a previous level of computing node because the next piece of input data is already stored in a queue deployed with the previous level of computing node. This further improves utilization of computing resources of the computing node, and accelerates the distillation process.

The first computing node is used as an example. In a previous iteration, the first computing node may distill a network layer in a student network for which the first computing node is responsible, to obtain the first sub-model, and directly obtain the first input data from the first queue in response to obtaining the first sub-model. After the first sub-model is distilled, in response to obtaining the updated first sub-model, third input data (namely, a next piece of input data) may be obtained from the first queue, and then a feedforward process existing when model distillation is performed on the updated first sub-model may be performed based on the third input data.

Similarly, for the teacher model, an output queue may be deployed. For example, the $n^{th}$ computing node is the second computing node, and the $(n+1)^{th}$ computing node is the first computing node. A second queue may be deployed (for the teacher model, a deployment position may be a storage position between the first computing node and the second computing node, or the second queue is deployed on the first computing node or the second computing node). The second computing node may store output data (including the second input data) in the second queue. In this way, the first computing node may obtain the second input data from the second queue. The second queue is used to store at least one piece of second data from the second computing node. Each piece of second data is an output obtained by the second computing node by processing data by using the fourth sub-model.

According to a second aspect, this application provides a model distillation method. The method is applied to a first computing node. A first sub-model and a second sub-model are deployed on the first computing node. The first sub-model is a partial model of a student model. The second sub-model is a partial model of a teacher model. The teacher model further includes a third sub-model connected to the second sub-model. The first computing node is communicatively connected to a second computing node. The third sub-model is deployed on the second computing node. The method includes:

First input data from the second computing node is obtained. The first input data is output data of the third sub-model.

In this embodiment of this application, a computing node cluster may perform knowledge distillation on the student model based on the teacher model. Each computing node may be responsible for distillation of a part of the student model, and all the computing nodes may coordinate with each other to distill the student model. The computing node cluster may include a plurality of computing nodes connected in series. The plurality of computing nodes connected in series may include the first computing node and the second computing node. The first computing node and the second computing node are communicatively connected.

The student model may be obtained by compressing the teacher model. For example, the student model may be obtained by pruning the teacher model. For example, the student model may be obtained by quantizing the teacher model.

In this embodiment of this application, the teacher model may include the second sub-model and the third sub-model. An output of the third sub-model is used as an input to the second sub-model, that is, the second sub-model and the third sub-model are partial models of the teacher model, and the third sub-model is a model, in the teacher model, connected before the second sub-model.

The first input data is processed by using the first sub-model, to obtain a first intermediate output.

The first input data is processed by using the second sub-model, to obtain a second intermediate output. The first intermediate output and the second intermediate output are used to determine a first gradient.

The first sub-model is distilled based on the first gradient, to obtain an updated first sub-model.

In an existing gradient back propagation process of knowledge distillation, update is gradually performed from an output layer to an input layer, and update of a previous level of network layer depends on completion of update of a current level of network layer. Therefore, when update of a network layer of one or more current levels of computing nodes is not completed, a large quantity of computing nodes are in a resource idle state. For example, a computing node 1 is responsible for distillation of a network layer 1, a computing node 2 is responsible for distillation of a network layer 2, and the network layer 2 is connected after the network layer 1. In a feedforward process, an output of the network layer 1 is used as an input of the network layer 2. During gradient back propagation, the network layer 1 is updated only after the network layer 2 is updated. That is, before the computing node 2 completes update of the network layer 2, the computing node 1 cannot update the network layer 1. In the embodiment described in the first aspect, a gradient back propagation process of each computing node is internally performed, there is no dependency on one next level of computing node (or N next levels of computing nodes, where N is greater than 1) to complete distillation of a network layer for which each computing node is responsible, and a gradient calculated by each computing node is not back-propagated to a previous level of computing node (for the first gradient obtained by the first computing node, the first gradient is used only to update the first sub-model, and may not be back-propagated to the second computing node, that is, is not used when the second computing node distills a network layer for which the second computing node is responsible), to achieve higher utilization of computing resources, and accelerate a distillation process.

However, in the asynchronous parallel training process described above, an error generated by the student model is propagated layer by layer (propagated during feedforward). During parallel training, if training of a previous segment is not completed, a current segment is affected by the previous segment. In addition, a queue is used, so that computing nodes may not need to wait for each other. However, non-sequential calculation brings a larger error to the model than common pipeline parallel training. Therefore, in an implementation, the teacher model may be used to mitigate error accumulation caused by the student model. Specifically, when distillation training starts, input data obtained by the computing node may be an output of a teacher model of a previous level of connected computing node (when distillation starts, an error of the student model is excessively large, and an input to the teacher model is more accurate. In this embodiment of this application, the error is propagated layer by layer, and therefore a convergence speed of the student model is very low. At the beginning, the output of the teacher model (an output of the third sub-model) is used as an input (used as an input to the first sub-model), so that error propagation during feedforward can be reduced, and the convergence speed of the student model can be increased). As the training proceeds, a change is gradually made to use a sample of an output queue of the student model as an input, to maintain consistency with an inference phase (only the student model is used).

In a possible implementation, the student model and the teacher model are transformer models, and the first sub-model and the second sub-model each include one or more transformer layers.

In a possible implementation, the first loss is used only to update the first sub-model.

In a possible implementation, that first input data from the second computing node is obtained includes:

The first input data is obtained from a first queue. The first queue is used to store at least one piece of first data from the second computing node. Each piece of first data is an output obtained by the second computing node by processing data by using the third sub-model. The at least one piece of first data includes the first input data.

In a possible implementation, the first queue is a first in first out queue.

In a possible implementation, before the first sub-model is distilled based on the first gradient, the at least one piece of first data includes second input data, and the second input data is output data of the third sub-model; and after the first sub-model is distilled based on the first gradient, the method further includes:

The second input data is obtained from the first queue in response to obtaining the updated first sub-model. The second input data is used as input data in a feedforward process existing when model distillation is performed on the updated first sub-model.

In a possible implementation, a storage resource required for storing the first sub-model is less than a storage resource required for storing the second sub-model.

This application further provides a model distillation method, including:

Performance requirement information sent by a terminal device is received.

In this embodiment of this application, the terminal device may send the performance requirement information to a device on a cloud side. The performance requirement information may include at least one of the following: a precision requirement, a latency requirement, or a model compression ratio requirement.

In some scenarios, when the terminal device needs to obtain, from the device on the cloud side, a model used for inference, the terminal device may send a model obtaining request to the device on the cloud side. The model obtaining request may include the performance requirement information. Correspondingly, the device on the cloud side may receive the performance requirement information sent by the terminal device, and determine, based on the performance requirement information, a student model suitable for the terminal device. When there is a high precision requirement, the student model may have a large size (for example, there are a large quantity of parameters or a large amount of storage space is required), to provide a model with very high performance. When there is a high latency requirement, the student model may have a small size, to provide a model that can implement quick derivation. When there is a high model compression ratio (a ratio of a size of a model before scaling to a size of a model after scaling) requirement, the student model may have a large size, to provide a model with a large model compression ratio.

A teacher model is obtained, and a student model is determined based on the performance requirement information. The student model is obtained by compressing the teacher model.

Knowledge distillation is performed on a student network based on a plurality of computing nodes, to obtain a student network after knowledge distillation. Each computing node is configured to be responsible for knowledge distillation of a partial network in the student network. Each computing node is configured to perform feedforward based on the partial network for which the computing node is responsible, to obtain output data. Each computing node is further configured to: determine a gradient based on the data obtained by performing feedforward based on the partial network for which the computing node is responsible, and perform gradient back propagation inside each computing node, to distill the partial network for which the computing node is responsible. The gradient determined by each computing node is not transferred to a connected computing node.

The student network obtained after knowledge distillation is sent to the terminal device.

In a possible implementation, the student model is a transformer model, and a partial model includes one or more transformer layers.

In a possible implementation, a first in first out queue is further deployed between the plurality of computing nodes connected in series, and the output data is transferred to the first in first out queue between the connected computing nodes, so that the connected computing nodes obtain the output data from the first in first out queue.

In this embodiment of this application, after determining the student network obtained after knowledge distillation, the device on the cloud side may send the determined student network obtained after knowledge distillation to the terminal device, and the terminal device may perform inference based on the received student model. It should be noted that the terminal device may further perform further model compression processing on the received student network obtained after knowledge distillation. This is not limited herein.

In the foregoing manner, the device on the cloud side may determine, based on the performance requirement information from the terminal device, a student model suitable for a requirement of the terminal device.

According to a third aspect, this application provides a computing node cluster, including a plurality of computing nodes connected in series. The plurality of computing nodes are configured to perform knowledge distillation on a student network. Each computing node is configured to be responsible for knowledge distillation of a partial network in the student network.

Each computing node is configured to perform feedforward based on the partial network for which the computing node is responsible, to obtain output data.

Each computing node is further configured to: determine a gradient based on the output data, and distill, based on the gradient, the partial network for which the computing node is responsible.

In a possible implementation, each computing node is configured to perform gradient back propagation inside each computing node, and the gradient determined by each computing node is not transferred to a connected computing node.

In a possible implementation, a student model is a transformer model, and a partial model includes one or more transformer layers.

In a possible implementation, a first in first out queue is further deployed between the plurality of computing nodes connected in series, and the method further includes:

Each computing node transfers the output data to the first in first out queue between the connected computing nodes, so that the connected computing nodes obtain the output data from the first in first out queue.

According to a fourth aspect, this application provides a model distillation apparatus. The apparatus is applied to a first computing node. A first sub-model and a second sub-model are deployed on the first computing node. The first sub-model is a partial model of a student model, and the student model further includes a third sub-model connected to the first sub-model. The second sub-model is a partial model of a teacher model, and the teacher model further includes a fourth sub-model connected to the second sub-model. The first computing node is communicatively connected to a second computing node. The third sub-model and the fourth sub-model are deployed on the second computing node. The apparatus includes:

an obtaining module, configured to obtain first input data and second input data from the second computing node, where the first input data is output data of the third sub-model, and the second input data is output data processed by the fourth sub-model;
a feedforward module, configured to: process the first input data by using the first sub-model, to obtain a first intermediate output; and
process the second input data by using the second sub-model, to obtain a second intermediate output, where the first intermediate output and the second intermediate output are used to determine a first gradient; and
a distillation module, configured to distill the first sub-model based on the first gradient, to obtain an updated first sub-model.

In a possible implementation, the student model and the teacher model are transformer models, and the first sub-model and the second sub-model each include one or more transformer layers.

In a possible implementation, the first sub-model does not include an output layer in the student model.

In a possible implementation, a storage resource required for storing the first sub-model is less than a storage resource required for storing the second sub-model.

In a possible implementation, the first gradient is used only to update the first sub-model.

In a possible implementation, the obtaining module is specifically configured to:

obtain the first input data from a first queue. The first queue is used to store at least one piece of first data from the second computing node. Each piece of first data is an output obtained by the second computing node by processing input data by using the third sub-model. The at least one piece of first data includes the first input data.

In a possible implementation, the first queue is a first in first out queue.

In a possible implementation, before the first sub-model is distilled based on the first gradient, the at least one piece of first data includes third input data, and the third input data is output data of the third sub-model; and the obtaining module is further configured to:

obtain the third input data from the first queue in response to obtaining the updated first sub-model. The third input data is used as input data in a feedforward process existing when model distillation is performed on the updated first sub-model.

In a possible implementation, the obtaining module is specifically configured to:

obtain the second input data from a second queue. The second queue is used to store at least one piece of second data from the second computing node. Each piece of second data is an output obtained by the second computing node by processing input data by using the fourth sub-model. The at least one piece of second data includes the second input data.

In a possible implementation, the first computing node is further communicatively connected to a third computing node, the student model further includes a fifth sub-model connected after the first sub-model, the first intermediate output is transferred to a third queue, the third queue is used to store the first intermediate output, so that the third computing node obtains the first intermediate output from the third queue, and the first intermediate output is used as input data in a feedforward process existing when model distillation is performed on the third sub-model.

According to a fifth aspect, this application provides a model distillation apparatus. The apparatus is applied to a first computing node. A first sub-model and a second sub-model are deployed on the first computing node. The first sub-model is a partial model of a student model. The second sub-model is a partial model of a teacher model. The teacher model further includes a third sub-model connected to the second sub-model. The first computing node is communicatively connected to a second computing node. The third sub-model is deployed on the second computing node. The apparatus includes:

an obtaining module, configured to obtain first input data from the second computing node, where the first input data is output data of the third sub-model;

a feedforward module, configured to: process the first input data by using the first sub-model, to obtain a first intermediate output; and

process the first input data by using the second sub-model, to obtain a second intermediate output, where the first intermediate output and the second intermediate output are used to determine a first gradient; and

a distillation module, configured to distill the first sub-model based on the first gradient, to obtain an updated first sub-model.

In a possible implementation, the student model and the teacher model are transformer models, and the first sub-model and the second sub-model each include one or more transformer layers.

In a possible implementation, the first loss is used only to update the first sub-model.

In a possible implementation, the obtaining module is specifically configured to:

obtain the first input data from a first queue. The first queue is used to store at least one piece of first data from the second computing node. Each piece of first data is an output obtained by the second computing node by processing data by using the third sub-model. The at least one piece of first data includes the first input data.

In a possible implementation, the first queue is a first in first out queue.

In a possible implementation, before the first sub-model is distilled based on the first gradient, the at least one piece of first data includes second input data, and the second input data is output data of the third sub-model; and the obtaining module is further configured to:

after the first sub-model is distilled based on the first gradient, obtain the second input data from the first queue in response to obtaining the updated first sub-model. The second input data is used as input data in a feedforward process existing when model distillation is performed on the updated first sub-model.

In a possible implementation, a storage resource required for storing the first sub-model is less than a storage resource required for storing the second sub-model.

This application provides a model distillation apparatus, including a receiving module, an obtaining module, a knowledge distillation module, and a sending module.

The receiving module is configured to receive performance requirement information sent by a terminal device.

The obtaining module is configured to: obtain a teacher model, and determine a student model based on the performance requirement information. The student model is obtained by compressing the teacher model.

The knowledge distillation module is configured to perform knowledge distillation on a student network based on a plurality of computing nodes, to obtain a student network after knowledge distillation. Each computing node is configured to be responsible for knowledge distillation of a partial network in the student network. Each computing node is configured to perform feedforward based on the partial network for which the computing node is responsible, to obtain output data. Each computing node is further configured to: determine a gradient based on the data obtained by performing feedforward based on the partial network for which the computing node is responsible, and perform gradient back propagation inside each computing node, to distill the partial network for which the computing node is responsible. The gradient determined by each computing node is not transferred to a connected computing node.

In a possible implementation, the student model is a transformer model, and a partial model includes one or more transformer layers.

In a possible implementation, a first in first out queue is further deployed between the plurality of computing nodes connected in series, and the output data is transferred to the first in first out queue between the connected computing nodes, so that the connected computing nodes obtain the output data from the first in first out queue.

The sending module is configured to send the student network obtained after knowledge distillation to the terminal device.

In the foregoing manner, a device on a cloud side may determine, based on the performance requirement information from the terminal device, a student model suitable for a requirement of the terminal device.

According to a sixth aspect, an embodiment of this application provides a model distillation apparatus. The apparatus may include a memory, a processor, and a bus system. The memory is configured to store a program, and the processor is configured to execute the program in the memory, to perform the method in any one of the first aspect and the optional implementations of the first aspect and the method in any one of the second aspect and the optional implementations of the second aspect.

According to a seventh aspect, an embodiment of this application provides a computer-readable storage medium. The computer-readable storage medium stores a computer program. When the computer program runs on a computer, the computer is enabled to perform the method in any one of the first aspect and the optional implementations of the first aspect and the method in any one of the second aspect and the optional implementations of the second aspect.

According to an eighth aspect, an embodiment of this application provides a computer program. When the computer program runs on a computer, the computer is enabled to perform the method in any one of the first aspect and the optional implementations of the first aspect and the method in any one of the second aspect and the optional implementations of the second aspect.

According to a ninth aspect, this application provides a chip system. The chip system includes a processor, configured to support a model distillation apparatus in implementing a function in the foregoing aspects, for example, sending or processing data or information in the foregoing methods. In a possible design, the chip system further includes a memory. The memory is configured to store program instructions and data that are necessary for an execution device or a training device. The chip system may include a chip, or may include a chip and another discrete device.

## BRIEF DESCRIPTION OF DRAWINGS

FIG. 1 is a schematic diagram of a structure of an artificial intelligence main framework;
FIG. 2 shows a natural language processing system;
FIG. 3 shows a natural language processing system;
FIG. 4 is a schematic diagram of a device related to natural language processing according to an embodiment of this application;
FIG. 5 is a schematic diagram of a device related to natural language processing according to an embodiment of this application;
FIG. 6 is a schematic diagram of a device related to natural language processing according to an embodiment of this application;
FIG. 7 is a schematic diagram of a device related to natural language processing according to an embodiment of this application;
FIG. 8 is a schematic diagram of a device related to natural language processing according to an embodiment of this application;
FIG. 9 is a schematic architectural diagram of a transformer layer;
FIG. 10 is a schematic diagram of a related device according to an embodiment of this application;

FIG. 11 is a schematic diagram of an embodiment of a model distillation method according to an embodiment of this application;

FIG. 12 is a schematic diagram of a structure of a neural network model according to an embodiment of this application;

FIG. 13 is a schematic diagram of a structure of a transformer layer;

FIG. 14 is a schematic diagram of an operation of an attention head head;

FIG. 15 is a schematic diagram of width scaling of a model according to an embodiment of this application;

FIG. 16 is a schematic diagram of depth scaling of a model according to an embodiment of this application;

FIG. 17 is a schematic diagram of an embodiment of a model distillation method according to an embodiment of this application;

FIG. 18 is a schematic diagram of an embodiment of a model distillation method according to an embodiment of this application;

FIG. 19 is a schematic diagram of an embodiment of a model distillation method according to an embodiment of this application;

FIG. 20 is a schematic diagram of a structure of a model distillation apparatus according to an embodiment of this application;

FIG. 21 is a schematic diagram of a structure of a model distillation apparatus according to an embodiment of this application;

FIG. 22 is a schematic diagram of a structure of a model distillation apparatus according to an embodiment of this application;

FIG. 23 is a schematic diagram of a structure of an execution device according to an embodiment of this application;

FIG. 24 is a schematic diagram of a structure of a training device according to an embodiment of this application; and

FIG. 25 is a schematic diagram of a structure of a chip according to an embodiment of this application.

## DESCRIPTION OF EMBODIMENTS

Embodiments of the present invention are described below with reference to the accompanying drawings in embodiments of the present invention. Terms used in implementations of the present invention are merely intended to explain specific embodiments of the present invention, but are not intended to limit the present invention.

Embodiments of this application are described below with reference to the accompanying drawings. A person of ordinary skill in the art may learn that with development of technologies and emergence of a new scenario, technical solutions provided in embodiments of this application are also applicable to a similar technical problem.

The terms "first", "second", and the like in the specification, the claims, and the accompanying drawings of this application are used to distinguish between similar objects, and are not necessarily used to describe a specific order or sequence. It should be understood that the terms used in such a manner are interchangeable in proper situations, and this is merely a differentiation manner for describing objects having a same attribute in embodiments of this application. In addition, the terms "include", "have", and any other variants thereof are intended to cover non-exclusive inclusion, so that a process, method, system, product, or device that includes a series of units is not necessarily limited to those units, but may include other units that are not expressly listed or are inherent to such a process, method, product, or device.

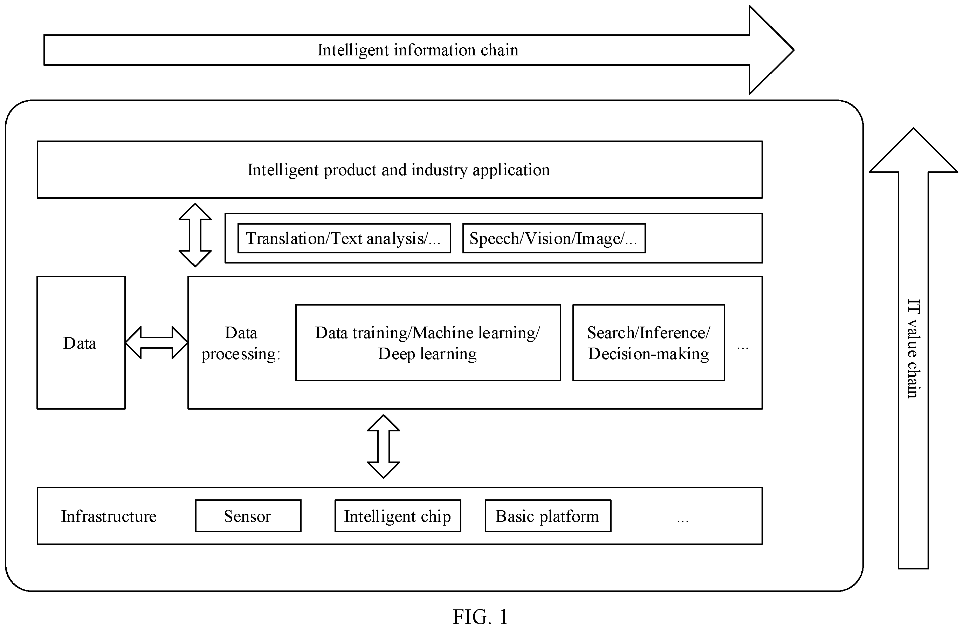

An overall working procedure of an artificial intelligence system is first described. FIG. 1 is a schematic diagram of a structure of an artificial intelligence main framework. The artificial intelligence main framework is described below from two dimensions: an "intelligent information chain" (a horizontal axis) and an "IT value chain" (a vertical axis). The "intelligent information chain" reflects a series of processes from data obtaining to data processing. For example, the process may be a general process of intelligent information perception, intelligent information representation and formation, intelligent inference, intelligent decision-making, and intelligent execution and output. In this process, data undergoes a refinement process of "data-information-knowledge-intelligence". The "IT value chain" reflects value brought by artificial intelligence to the information technology industry from an underlying infrastructure and information (providing and processing technical implementations) of human intelligence to an industrial ecological process of a system.

(1) Infrastructure

The infrastructure provides computing capability support to the artificial intelligence system, communicates with the outside world, and implements support by using a basic platform. The infrastructure communicates with the outside by using a sensor. A computing capability is provided by an intelligent chip (a hardware acceleration chip such as a CPU, an NPU, a GPU, an ASIC, or an FPGA). The basic platform includes a related platform, for example, a distributed computing framework and network, for assurance and support, and may include a cloud storage and computing network, an interconnection network, and the like. For example, the sensor communicates with the outside to obtain data, and the data is provided, for calculation, to an intelligent chip in a distributed computing system provided by the basic platform.

(2) Data

Data at an upper layer of the infrastructure indicates a data source in the artificial intelligence field. The data relates to a graphic, an image, speech, and text, further relates to internet of things data of a conventional device, and includes service data of a conventional system and perception data such as force, displacement, a liquid level, a temperature, and humidity.

(3) Data processing

Data processing usually includes data training, machine learning, deep learning, search, inference, decision-making, and other manners.

Machine learning and deep learning may be used for performing symbolic and formal intelligent information modeling, extraction, preprocessing, training, and the like on data.

Inference is a process in which a human intelligent inference manner is simulated in a computer o an intelligent system, and machine thinking and problem resolving are performed by using formal information according to an inference control policy. Atypical function is search and match.

Decision-making is a process in which a decision is made after inference is performed on intelligent information, and usually provides classification, ranking, prediction, and other functions.

(4) General capabilities

After data processing described above is performed on data, some general capabilities may be further formed based on a data processing result. For example, the general capabilities may be an algorithm or a general system, for example, translation, text analysis, computer vision processing, speech recognition, and image recognition.

(5) Intelligent product and industry application

The intelligent product and industry application are a product and an application of the artificial intelligence system in various fields, and are package of an overall solution of artificial intelligence, so that decision-making for intelligent information is implemented as a product and an application is implemented. Fields to which the artificial intelligence system is applied mainly include an intelligent terminal, intelligent transportation, intelligent healthcare, self-driving, a smart city, and the like.

This application may be applied to, but is not limited to, the natural language processing field in the artificial intelligence field, and may be specifically applied to fields such as neural network compression in the natural language processing field and neural network inference in the natural language processing field. A plurality of application scenarios in which a plurality of products are implemented are described below.

To better understand the solutions in embodiments of this application, a possible application scenario of embodiments of this application is first briefly described below with reference to FIG. 1 to FIG. 8.

Scenario 1: Neural network compression

This application may be applied to a service related to neural network compression. The service may be specifically a neural network compression service provided by a server on a cloud side. A user may transfer information related to model compression to a neural network compression system on the cloud side (for example, the cloud server) by using user equipment. The information related to model compression may be a performance requirement of the user for a compressed model and the like. Then, the server on the cloud side may obtain a compression result (for example, a student model obtained after distillation in embodiments of this application) by using a specific neural network compression method based on the performance requirement uploaded by the user, and deliver the compression result to the user equipment.

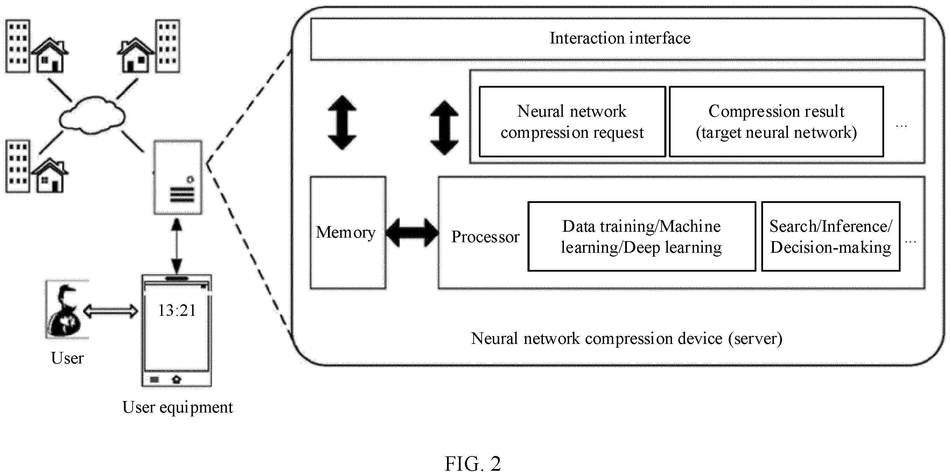

FIG. 2 shows a neural network compression system. The neural network search system may include user equipment and a neural network search device. The user equipment includes a mobile phone, a personal computer, an information processing center, or another intelligent terminal. The user equipment is an initiator of neural network compression, and a user usually initiates a neural network compression request by using the user equipment.

The neural network compression device may be a device or a server that has a neural network compression function, for example, a cloud server, a network server, an application server, and a management server. The neural network compression device receives the neural network compression request from the intelligent terminal through an interaction interface, then performs neural network compression in a manner such as machine learning, deep learning, search, inference, or decision-making by using a memory that stores data and a processor, and feeds back a compression result (for example, a student model obtained after distillation in embodiments of this application) to the user equipment. The memory in the neural network compression device may be a general term, and includes a local storage and a database that stores historical data. The database may be on the neural network compression device, or may be on another network server.

In the neural network compression system shown in FIG. 2, the user equipment may receive an instruction from the user. For example, the user equipment may receive a model performance requirement that is entered by the user and that is for neural network compression, and then initiate a request to the neural network compression device.

In FIG. 2, the neural network compression device may perform the model distillation method in embodiments of this application.

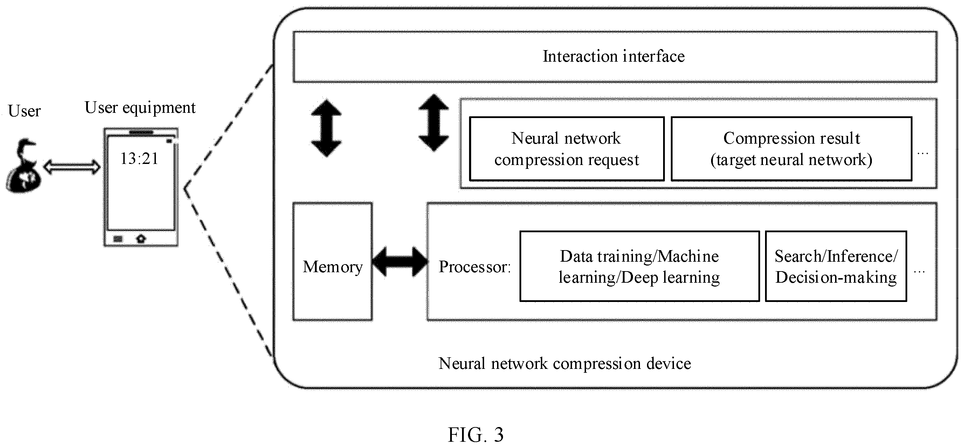

FIG. 3 shows another neural network compression system. In FIG. 3, user equipment is directly used as a neural network compression device. The user equipment can directly receive a model performance requirement that is entered by a user and that is for neural network compression, and hardware of the user equipment directly performs neural network compression. A specific process is similar to that in FIG. 2. Reference may be made to the foregoing descriptions. Details are not described herein.

In FIG. 3, the user equipment may perform the model distillation method in embodiments of this application.

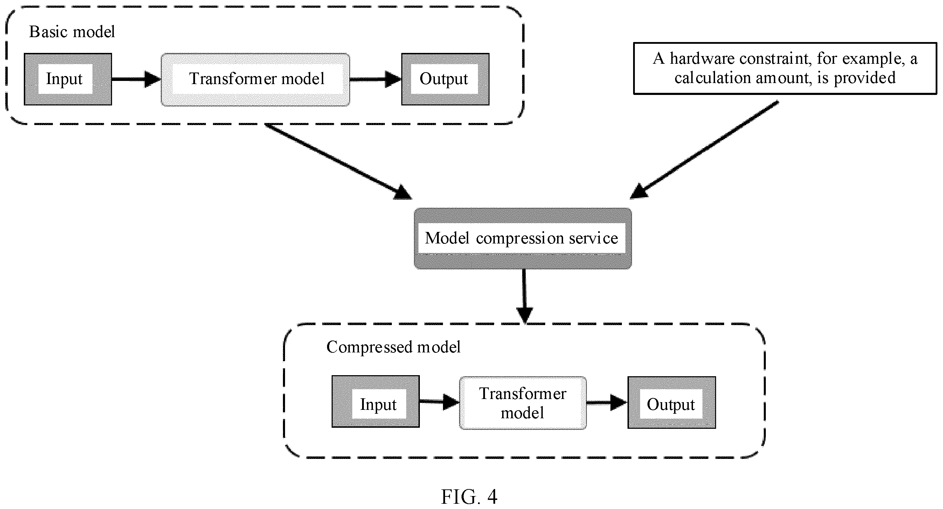

In a possible implementation, the compression service provided in this application is applicable to compression of a transformer model. The compression service may be used to quickly and efficiently help a user compress a basic model (transformer model) provided or specified by the user, and provide a new model (transformer model) that meets a hardware constraint. As shown in FIG. 4, the user enters a hardware constraint condition, for example, a calculation amount constraint, of a required model, and calculates that the basic model needs to be compressed by using a provided efficient parallel training solution, to output a new model that meets a requirement of the user.

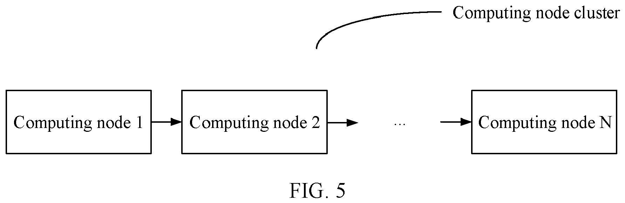

It should be understood that with reference to FIG. 5, the neural network compression device in this embodiment of this application may be in a form of a computing node cluster. The computing node cluster may include a plurality of computing nodes connected in series, and compression may be performed through collaboration between the plurality of computing nodes connected in series. The computing nodes herein may be different devices on a cloud side or a terminal side, or may be different chips of a same device or different devices. Computing nodes may communicate with each other. In a training phase, a plurality of computing nodes on the terminal side may collaborate to deploy a large model on each device through division, and collaborate to perform compression training to obtain a final small model. Finally, the small model is deployed, through communication, on each platform for inference.

Scenario 2: Natural language processing

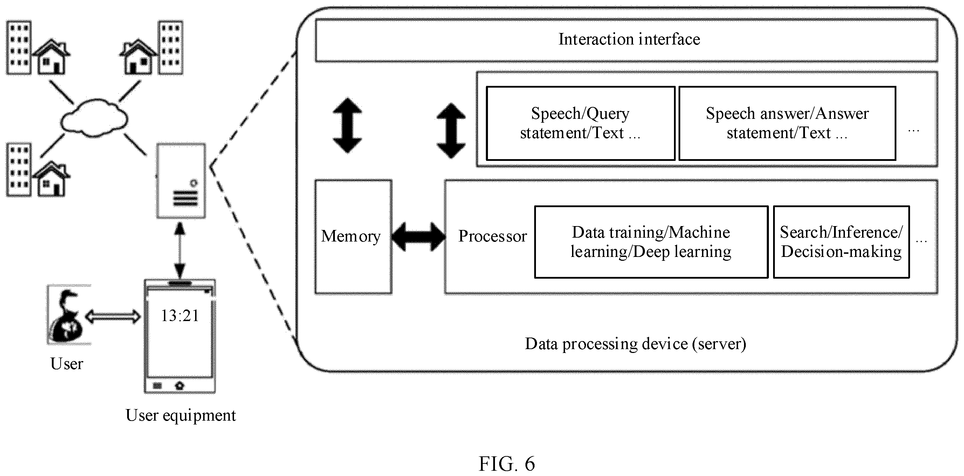

FIG. 6 shows a natural language processing system. The natural language processing system includes user equipment and a data processing device. The user equipment includes a mobile phone, a personal computer, an information processing center, or another intelligent terminal. The user equipment is an initiator of natural language data processing. As an initiator of a request for language questioning and answering, querying, or the like, a user usually initiates the request by using the user equipment.

The data processing device may be a device or a server that has a data processing function, for example, a cloud server, a network server, an application server, and a management server. The data processing device receives a question (for example, to-be-processed data in embodiments of this application) such as a query statement/speech/text from the intelligent terminal through an interaction interface, then performs language data processing in a manner such as machine learning, deep learning, search, inference, or decision-making by using a memory that stores data and a processor for data processing (for example, performs data processing by using a student model obtained after distillation in embodiments of this application), and feeds back a processing result (for example, a data processing result in embodiments of this application) to the user equipment. The memory in the data processing device may be a general name, and includes a local storage and a database that stores historical data. The database may be on the data processing device, or may be on another network server.

In the natural language processing system shown in FIG. 6, the user equipment may receive an instruction from the user. For example, the user equipment may receive a piece of text entered by the user, and then initiate a request to the data processing device. Then, the data processing device performs a natural language processing application (for example, text classification, text inference, named entity recognition, or translation) on the piece of text obtained by the user equipment, to obtain a processing result (for example, a classification result, an inference result, a named entity recognition result, or a translation result) corresponding to the natural language processing application for the piece of text. For example, the user equipment may receive a piece of Chinese text entered by the user, and then initiate a request to the data processing device. Then, the data processing device performs entity classification on the piece of Chinese text, to obtain an entity classification result for the piece of Chinese text. For example, the user equipment may receive a piece of Chinese text entered by the user, and then initiate a request to the data processing device. Then, the data processing device translates the piece of Chinese text into English, to obtain an English translation of the piece of Chinese text.

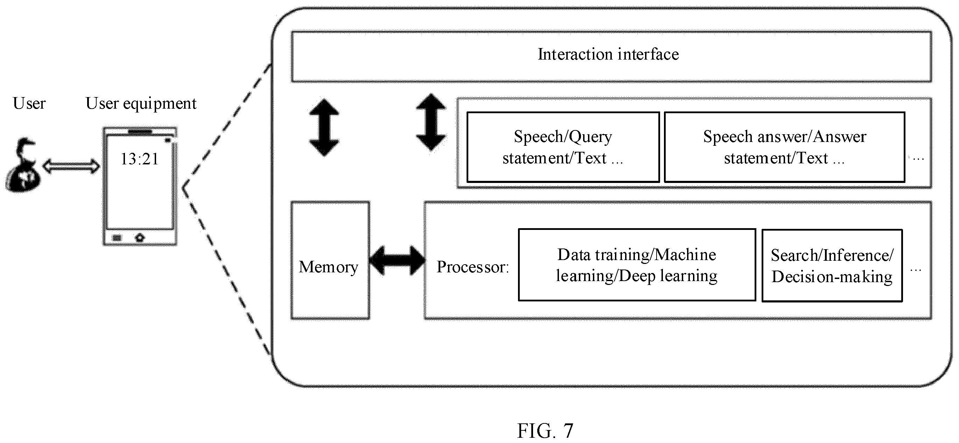

FIG. 7 shows another natural language processing system. In FIG. 7, user equipment is directly used as a data processing device. The user equipment can directly receive an input (for example, to-be-processed data in embodiments of this application) from a user, and hardware of the user equipment directly processes the input. A specific process is similar to that in FIG. 6. Reference may be made to the foregoing descriptions. Details are not described herein.

In the natural language processing system shown in FIG. 7, the user equipment may receive an instruction from the user. For example, the user equipment may receive a piece of text entered by the user, and then the user equipment performs a natural language processing application (for example, text classification, text inference, named entity recognition, or translation) on the piece of text, to obtain a processing result (for example, a classification result, an inference result, a named entity recognition result, or a translation result) corresponding to the natural language processing application for the piece of text. For example, the user equipment may receive a piece of Chinese text entered by the user, and perform entity classification on the piece of Chinese text, to obtain an entity classification result for the piece of Chinese text. For example, the user equipment may receive a piece of Chinese text entered by the user, and translate the piece of Chinese text into English, to obtain an English translation of the piece of Chinese text.

In this embodiment of this application, the user equipment may store a target neural network, and execute an inference task based on the target neural network each time after an operating system (operating system, OS) or an application (application, APP) invokes the model.

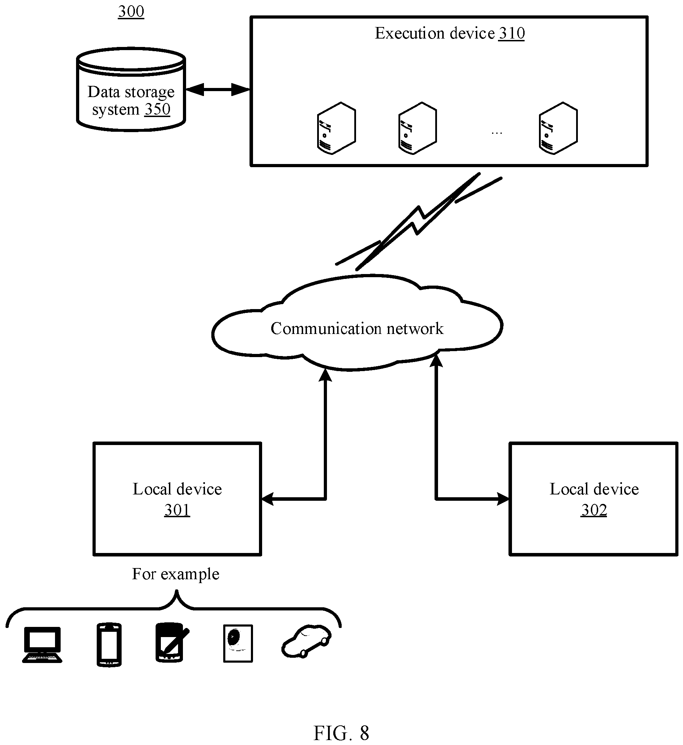

FIG. 8 is a schematic diagram of a device 300 related to natural language processing according to an embodiment of this application.

The user equipment in FIG. 6 and FIG. 7 may be specifically a local device 301 or a local device 302 in FIG. 8. The data processing device in FIG. 6 may be specifically an execution device 310 in FIG. 8. A data storage system 350 may store data to be processed by the execution device 310. The data storage system 350 may be integrated into the execution device 310, or may be disposed on a cloud or another network server.

The processors in FIG. 6 and FIG. 7 may perform data training/machine learning/deep learning by using a neural network model or another model, and perform a natural language processing application (for example, text classification, sequence tagging, reading comprehension, text generation, text interference, or translation) on a text sequence by using a model obtained through training (for example, a student model obtained after distillation in embodiments of this application), to obtain a corresponding processing result.

Embodiments of this application relate to a large quantity of applications of a neural network. Therefore, for ease of understanding, related terms and related concepts such as the neural network in embodiments of this application are first described below.

(1) Neural network

The neural network may include a neuron. The neuron may be an operation unit that uses xs (namely, input data) and an intercept of 1 as an input. An output of the operation unit may be as follows:

$$h_{W,b}(x) = f(W^T x) = f(\sum_{s=1}^{n} W_s x_s + b)$$

Herein, s=1, 2, ..., and n, n is a natural number greater than 1, Ws is a weight of xs, b is a bias of the neuron, and f is an activation function (activation functions) of the neuron, and is used to introduce a non-linear characteristic into the neural network, to convert an input signal of the neuron into an output signal. The output signal of the activation function may be used as an input of a next convolutional layer. The activation function may be a sigmoid function. The neural network is a network formed by linking a plurality of single neurons together. That is, an output of a neuron may be an input of another neuron. An input of each neuron may be connected to a local receptive field of a previous layer to extract a feature of the local receptive field. The local receptive field may be a region including several neurons.

(2) Transformer layer

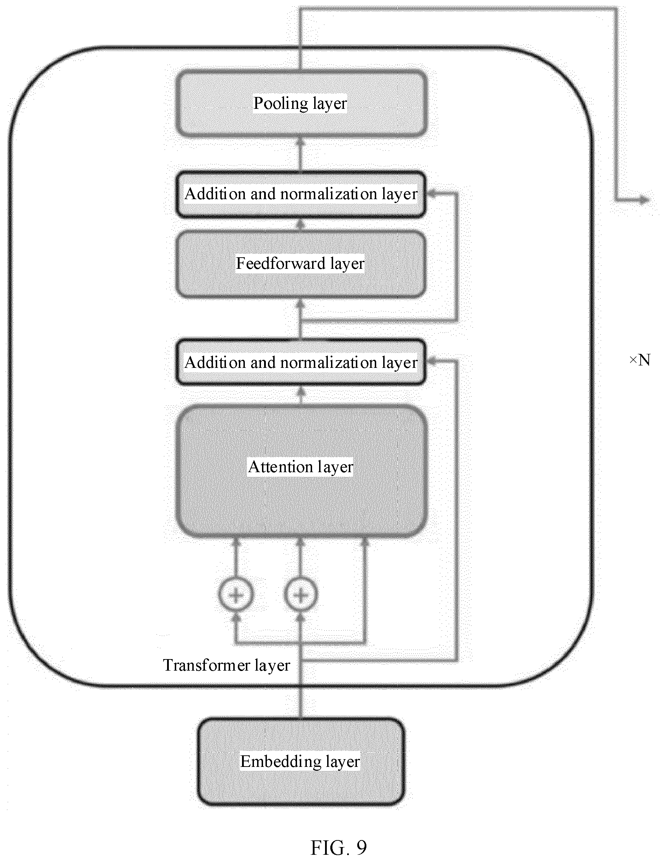

FIG. 9 is a schematic diagram of an architecture of a transformer layer. As shown in FIG. 9, a neural network includes an embedding layer and at least one transformer layer. The at least one transformer layer may be N transformer layers (N is an integer greater than 0). Each transformer layer includes an attention layer, an addition and normalization (add & norm) layer, a feedforward (feedforward) layer, and an addition and normalization layer that are sequentially adjacent to each other. At the embedding layer, embedding processing is performed on a current input, to obtain a plurality of feature vectors. At the attention layer, P input vectors are obtained from a layer preceding the transformer layer, any first input vector in the P input vectors is used as a center, and an intermediate vector corresponding to the first input vector is obtained based on a degree of correlation between each input vector within a preset attention window and the first input vector. In this way, P intermediate vectors corresponding to the P input vectors are determined. At a pooling layer, the P intermediate vectors are combined into Q output vectors. A plurality of output vectors obtained at a last transformer layer in the at least one transformer layer are used as feature representations of the current input.

The foregoing steps are described below in detail with reference to specific examples.

First, at the embedding layer, embedding processing is performed on the current input, to obtain the plurality of feature vectors.

The embedding layer may be referred to as an input embedding (input embedding) layer. The current input may be a text input, for example, a piece of text or a sentence. The text may be Chinese text, English text, or text in another language. After the current input is obtained, embedding processing may be performed on all words in the current input at the embedding layer, to obtain feature vectors of all the words. In some embodiments, as shown in FIG. 1, the embedding layer includes an input embedding layer and a positional encoding (positional encoding) layer. At the input embedding layer, word embedding processing may be performed on all the words in the current input, to obtain word embedding vectors of all the words. At the positional encoding layer, positions of all the words in the current input may be obtained, to generate position vectors for the positions of all the words. In some examples, the positions of all the words may be absolute positions of all the words in the current input. For example, the current input is "what date should the Huabei debt be repaid", where a position of "what" may be represented as a first position, a position of "date" may be represented as a second position, and so on. In some examples, the positions of all the words may be positions of all the words relative to each other. For example, the current input is still "what date should the debt be repaid", where a position of "what" may be represented as preceding "date", a position of "date" may be represented as following "what" and preceding "should", and so on. When the word embedding vectors and the position vectors of all the words in the current input are obtained, the position vectors of all the words and the corresponding word embedding vectors may be combined to obtain the feature vectors of all the words, namely, the plurality of feature vectors corresponding to the current input. The plurality of feature vectors may be represented as an embedding matrix with a preset dimension. For the plurality of feature vectors, a quantity of the feature vectors may be set to M, and the preset dimension may be set to a dimension of H. In this case, the plurality of feature vectors may be represented as an $M \times H$ embedding matrix.

Then, the P input vectors are obtained from a layer preceding a first transformer layer, the any first input vector in the P input vectors is used as the center, and the intermediate vector corresponding to the first input vector is obtained based on the degree of correlation between each input vector within the preset attention window and the first input vector. In this way, the P intermediate vectors corresponding to the P input vectors are determined. The attention layer may also be referred to as a multi-head attention (multi-head attention) layer. In an example, the attention layer may be a fixed window multi-head attention (fixed window multi-head attention) layer.

In some embodiments, the first transformer layer may be a layer following the embedding layer, and the P input vectors are the plurality of feature vectors obtained from the embedding layer. In some embodiments, the at least one transformer layer in the neural network provided in this embodiment of this specification further includes a second transformer layer. The second transformer layer is a layer preceding first self-attention. In this case, the P input vectors are P output vectors that are output from the second transformer layer. At the last transformer layer in the neural network, the plurality of output vectors obtained by performing the foregoing steps may be used as the feature representations of the current input. The feature representation is a feature representation, of the current input, suitable for computer processing, and may be used for tasks such as text similarity, text classification, reading comprehension, and machine translation.

(3) Attention mechanism (attention mechanism)

The attention mechanism simulates an internal process of an observational behavior of a creature, is a mechanism that aligns internal experience with external feelings to increase observation precision of some regions, and can quickly select high-value information from a large amount of information by using limited attention resources. The attention mechanism can quickly extract an important feature of sparse data, and therefore is widely used in natural language processing tasks, especially machine translation. A self-attention mechanism (self-attention mechanism) is improvement of the attention mechanism. The self-attention mechanism becomes less dependent on external information and is better at capturing an internal correlation of data or features. An essential idea of the attention mechanism may be rewritten as the following formula:

Herein, $Lx=\|Source\|$ represents a length of a source. The formula means that constituent elements in the source are assumed to include a series of data pairs. In this case, an element query in a target target is provided, similarity or a correlation between the query and each key is calculated to obtain a weight coefficient of a value corresponding to each key, and then weighted summation is performed on values, to obtain a final attention value. Therefore, in essence, the attention mechanism is to perform weighted summation on values of the elements in the source, and a query and key are used to calculate a weight coefficient of a corresponding value. Conceptually, attention may be understood as selecting a small amount of important information from a large amount of information, focusing on the important information, and ignoring most of unimportant information. A process of focusing is reflected in calculation of the weight coefficient. A greater weight indicates that a value corresponding to the weight is more focused, that is, the weight indicates importance of information, and the value is the information corresponding to the weight. The self-attention mechanism may be understood as an intra-attention (intra-attention) mechanism. The attention mechanism occurs between the element query in the target and all the elements in the source. The self-attention mechanism is an attention mechanism that occurs between elements in a source or between elements in a target, and may also be understood as an attention calculation mechanism in a special case of Target=Source. A specific calculation process of the self-attention mechanism is the same except that a calculation object changes.

(4) Natural language processing (natural language processing, NLP)

A natural language (natural language) is a human language, and natural language processing (NLP) is processing of the human language. Natural language processing is a process of systematic analysis, understanding, and information extraction of text data in an intelligent and efficient manner. By using NLP and components of NLP, massive chunks of text data can be managed, or a large quantity of automated tasks can be executed, and various problems such as automatic summarization (automatic summarization), machine translation (machine translation, MT), named entity recognition (named entity recognition, NER), relation extraction (relation extraction, RE), information extraction (information extraction, IE), sentiment analysis, speech recognition (speech recognition), a question answering (question answering) system, and topic segmentation can be resolved.

For example, there may be the following several types of natural language processing tasks.

Sequence tagging: A model needs to provide a classification category for each word in a sentence based on context. For example, sequence tagging is Chinese word segmentation, part-of-speech tagging, named entity recognition, or semantic role labeling.

Classification task: A classification value is output for an entire sentence. For example, the classification task is text classification.

Sentence relation inference: Two sentences are provided, and it is determined whether the two sentences have a nominal relation. For example, sentence relation inference is entailment, QA, semantic paraphrasing, or natural language inference.

Generative task: One piece of text is output, and another piece of text is generated. For example, the generative task is machine translation, text summarization, poem writing and sentence making, or picture description.

(5) Neural network compression

Compression may include at least one of the following manners: model pruning, weight sharing, kernel sparsity (regular), quantization, binarization, low-rank decomposition, and the like.

Quantization is neural network quantization (neural network quantization), and is a model compression technology for converting floating-point storage (operation) into integer storage (operation). For example, a model parameter of a model is originally represented by using float32 (a 32-bit floating point), and the model parameter of the model is represented by using int8 (an 8-bit fixed point) after quantization. By performing a quantization operation on the model, an operation speed of the model is increased at a cost of a small precision loss.

Model quantization is essentially conversion/mapping between data of two data types. In an implementation of converting floating-point data (data whose data type is a floating point) into fixed-point data (data whose data type is a fixed point), the following formula may be used:

$$Q = \frac{R}{S} + Z$$

Herein, R is floating-point data that is input, Q is fixed-point data obtained by quantizing the floating-point data R, Z represents a value of a zero point (Zero Point), and S represents a scale. It can be learned that conversion between the two pieces of data can be performed after S and Z are determined. There are many manners of determining S and Z. For example, a manner is as follows:

$$S = \frac{R_{max} - R_{min}}{Q_{max} - Q_{min}};$$

and

$$Z = Q_{max} - R_{max}/S$$

Herein, Rmax represents a maximum value of the floating-point data that is input, Rmin represents a minimum value of the floating-point data that is input, Qmax represents a maximum value of the fixed-point data, and Rmin represents a minimum value of the fixed-point data.

For conversion between fixed-point data with different quantities of bits (quantities of bits, where 1 bit = 1 bit), refer to the foregoing conversion manner between the floating-point data and the fixed-point data. Alternatively, another conversion manner in the conventional technology may be used. Details are not described herein.

In an implementation, conversion between 4-bit data and 8-bit data may be performed in the foregoing conversion manner. In an implementation, conversion between floating-point data and 2-bit (1-bit) data may be performed by using the following formula:

$$f(x) = \begin{cases} 1, x \geq T \\ 0, -T \leq x < T \\ -1, x \leq -T \end{cases}$$

The 2-bit data may be represented as three numbers: -1, 0, and 1. T is a threshold. When the floating-point data is greater than or equal to T, 2-bit fixed-point data obtained through conversion is 1. When the floating-point data is less than -T, a value of the floating-point data is converted into -1. When the floating-point data is another value, a value of the floating-point data is converted into 0. A manner of conversion into the 1-bit data is similar to the manner of conversion into the 2-bit data, but fixed-point values of the 1-bit data are only -1 and 1, and a value of T is 0.

Pruning may be understood as removing a partial network structure in a network.

After the model is compressed, storage resources required for storing a compressed model are reduced. To ensure precision of the compressed model, knowledge distillation may be performed on the compressed model. Specifically, the model before compression may be used as a teacher model, the compressed model may be used as a student model, and knowledge distillation (or briefly referred to as distillation) may be performed on the student model.

The teacher (teacher) model may also be referred to as a teacher model, a guidance model, or the like. This is not limited herein.

When knowledge distillation is performed, the compressed model (another simple network) may be trained by using the model before compression (a pre-trained complex network), so that the simple network may have a same or similar data processing capability as the complex network. Knowledge distillation is to transfer "knowledge" of a trained complex network to a network with a simpler structure. The simple network may have a smaller quantity of parameters than the complex network.

It should be noted that the same or similar data processing capability may be understood as that when same to-be-processed data is processed, processing results obtained by using the student model obtained after knowledge distillation and the teacher model are the same or similar.

(6) Loss function

In a process of training a deep neural network, it is expected that an output of the deep neural network is as much as possible close to a predicted value that is actually expected. Therefore, a predicted value of a current network and a target value that is actually expected may be compared, and then a weight vector of each layer in the neural network is updated based on a difference between the predicted value and the target value (certainly, there is usually an initialization process before update is performed for the first time, that is, parameters are preconfigured for all layers in the deep neural network). For example, if the predicted value of the network is large, the weight vector is adjusted to decrease the predicted value, and adjustment is continuously performed, until the deep neural network can predict the target value that is actually expected or a value that is very close to the target value that is actually expected. Therefore, "how to obtain the difference between the predicted value and the target value through comparison" needs to be predefined. This is a loss function (loss function) or an objective function (objective function). The loss function and the objective function are important equations used to measure the difference between the predicted value and the target value. The loss function is used as an example. A higher output value (loss) of the loss function indicates a larger difference. Therefore, training of the deep neural network is a process of minimizing the loss.

When knowledge distillation is performed, a loss needs to be constructed based on an output of a teacher model and an output of a student model. The output of the model used to construct the loss may be an output of an output layer in the model, may be an output of an intermediate feature map of an intermediate network layer, or may be a result obtained by processing an output of an output layer and/or an output of an intermediate feature map of an intermediate network layer.

(7) Back propagation algorithm

A convolutional neural network may correct a value of a parameter of an initial super-resolution model in a training process based on an error back propagation (back propagation, BP) algorithm, so that an error loss of reconstructing the super-resolution model is increasingly small. Specifically, an input signal is transferred forward until an error loss occurs in an output, and the parameter of the initial super-resolution model is updated based on back propagation error loss information, so that the error loss converges. The back propagation algorithm is an error loss-centered back propagation motion, and is used to obtain an optimal parameter, for example, a weight matrix, of the super-resolution model.

A more detailed architecture of an execution body for performing the neural network search method in embodiments of this application is described below.

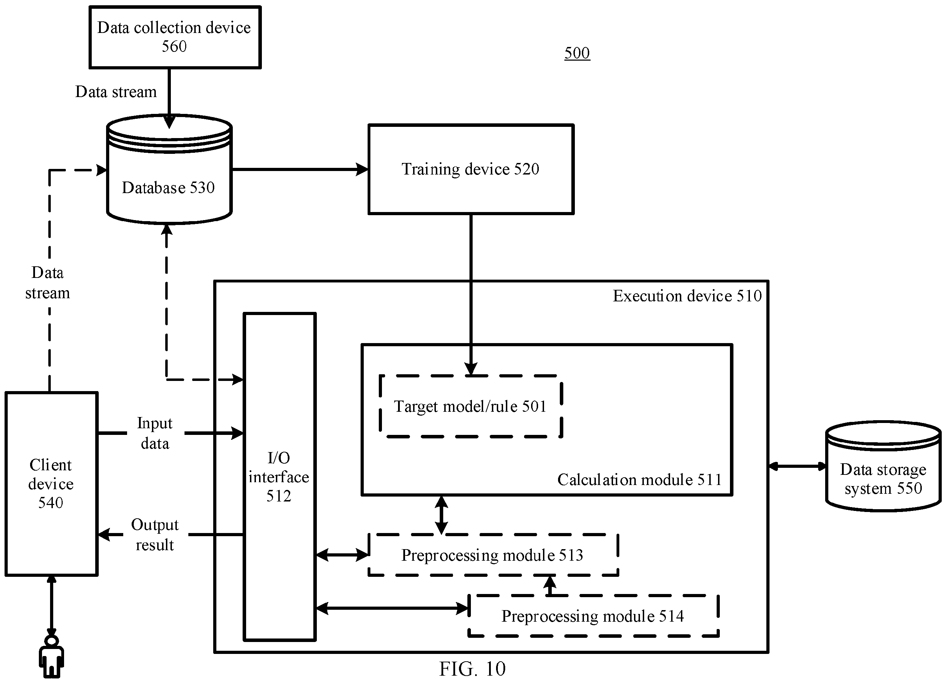

A system architecture provided in an embodiment of this application is described below in detail with reference to FIG. 10. FIG. 10 is a schematic diagram of a system architecture according to an embodiment of this application. As shown in FIG. 10, the system architecture 500 includes an execution device 510, a training device 520, a database 530, a client device 540, a data storage system 550, and a data collection system 560.

The execution device 510 includes a calculation module 511, an I/O interface 512, a preprocessing module 513, and a preprocessing module 514. The calculation module 511 may include a target model/rule 501, and the preprocessing module 513 and the preprocessing module 514 are optional.

The data collection device 560 is configured to collect a training sample. The training sample may be image data, text data, audio data, or the like. In this embodiment of this application, the training sample is data used when a student model is distilled. After collecting the training sample, the data collection device 560 stores the training sample in the database 530.

The training device 520 may maintain a training sample in the database 530, and distill the student model based on a teacher model, to obtain the target model/rule 501. In this embodiment of this application, the target model/rule 501 may be a student model obtained after distillation.

It should be noted that in an actual application, the training sample maintained in the database 530 is not necessarily collected by the data collection device 560, and may be received from another device. In addition, it should be noted that the training device 520 does not necessarily completely train the target model/rule 501 based on the training sample maintained in the database 530, and may perform model training by obtaining a training sample from a cloud or another position. The foregoing descriptions should not be construed as a limitation on this embodiment of this application.

The target model/rule 501 obtained through training by the training device 520 may be applied to different systems or devices, for example, applied to the execution device 510 shown in FIG. 10. The execution device 510 may be a terminal such as a mobile phone terminal, a tablet computer, a notebook computer, an augmented reality (augmented reality, AR)/virtual reality (virtual reality, VR) device, or a vehicle-mounted terminal, may be a server or a cloud, or the like.

Specifically, the training device 520 may transfer the student model obtained after distillation to the execution device 510.

In FIG. 10, the input/output (input/output, I/O) interface 512 is configured for the execution device 510, and is configured to exchange data with an external device. A user may enter data (for example, to-be-processed data in embodiments of this application) to the I/O interface 512 by using the client device 540.

The preprocessing module 513 and the preprocessing module 514 are configured to perform preprocessing based on the input data received by the I/O interface 512. It should be understood that the preprocessing module 513 and the preprocessing module 514 may not exist, or there may be only one preprocessing module. When the preprocessing module 513 and the preprocessing module 514 do not exist, the calculation module 511 may be directly used to process the input data.

When the execution device 510 preprocesses the input data, or when the calculation module 511 in the execution device 510 performs a related processing process such as calculation, the execution device 510 may invoke data, code, and the like in the data storage system 550 for corresponding processing, or may store data, instructions, and the like obtained through corresponding processing in the data storage system 550.

Finally, the I/O interface 512 presents a processing result (for example, a data processing result in embodiments of this application) to the client device 540, to provide the processing result for the user.

In the case shown in FIG. 10, the user may manually provide the input data, and the "manually providing the input data" may be implemented by performing an operation by using an interface provided by the I/O interface 512. In another case, the client device 540 may automatically send the input data to the I/O interface 512. If the client device 540 is required to automatically send the input data, authorization from the user needs to be obtained, and the user may set corresponding permission in the client device 540. The user may view, on the client device 540, a result output by the execution device 510. The result may be specifically presented in a specific manner, for example, display, sound, or an action. The client device 540 may also be used as a data collection terminal, collect the input data that is input to the I/O interface 512 and that is shown in the figure and the output result output from the I/O interface 512, use the input data and the output result as new sample data, and store the new sample data in the database 530. Certainly, alternatively, the client device 540 may not perform collection, and the I/O interface 512 directly uses the input data that is input to the I/O interface 512 and that is shown in the figure and the output result output from the I/O interface 512 as new sample data, and stores the new sample data in the database 530.

It should be noted that FIG. 10 is merely a schematic diagram of a system architecture according to an embodiment of this application. A positional relationship between devices, components, modules, and the like shown in the figure does not constitute any limitation. For example, in FIG. 10, the data storage system 550 is an external memory with respect to the execution device 510. In another case, the data storage system 550 may be disposed in the execution device 510. It should be understood that the execution device 510 may be deployed in the client device 540.

Details from a perspective of model inference are as follows:
In this embodiment of this application, the calculation module 511 in the execution device 520 may obtain the code stored in the data storage system 550, to implement the data processing method in embodiments of this application.

In this embodiment of this application, the calculation module 511 in the execution device 520 may include a hardware circuit (for example, an application-specific integrated circuit (application-specific integrated circuit, ASIC), a field programmable gate array (field programmable gate array, FPGA), a general-purpose processor, a digital signal processor (digital signal processing, DSP), a microprocessor, or a microcontroller), or a combination thereof. For example, the training device 520 may be a hardware system having an instruction execution function, for example, a CPU or a DSP, a hardware system having no instruction execution function, for example, an ASIC or an FPGA, or a combination of the foregoing hardware system having no instruction execution function and the foregoing hardware system having an instruction execution function.

Specifically, the calculation module 511 in the execution device 520 may be a hardware system having an instruction execution function. The data processing method provided in embodiments of this application may be software code stored in a memory. The calculation module 511 in the execution device 520 may obtain the software code from the memory, and execute the obtained software code to implement the data processing method provided in embodiments of this application.

It should be understood that the calculation module 511 in the execution device 520 may be a combination of a hardware system having no instruction execution function and a hardware system having an instruction execution function. Some steps of the data processing method provided in embodiments of this application may alternatively be implemented by using the hardware system that is in the calculation module 511 in the execution device 520 and that has no instruction execution function. This is not limited herein.

Details from a perspective of model training are as follows:
In this embodiment of this application, the training device 520 may obtain code stored in a memory (not shown in FIG. 10, and may be integrated into the training device 520 or separately deployed from the training device 520), to implement the model distillation method in embodiments of this application.

In this embodiment of this application, the training device 520 may include a hardware circuit (for example, an application-specific integrated circuit (application-specific integrated circuit, ASIC), a field programmable gate array (field programmable gate array, FPGA), a general-purpose processor, a digital signal processor (digital signal processing, DSP), a microprocessor, or a microcontroller), or a combination thereof. For example, the training device 520 may be a hardware system having an instruction execution function, for example, a CPU or a DSP, a hardware system having no instruction execution function, for example, an ASIC or an FPGA, or a combination of the foregoing hardware system having no instruction execution function and the foregoing hardware system having an instruction execution function.

Specifically, the training device 520 may be a hardware system having an instruction execution function. The data processing method provided in embodiments of this application may be software code stored in a memory. The training device 520 may obtain the software code from the memory, and execute the obtained software code to implement the model distillation method provided in embodiments of this application.

It should be understood that the training device 520 may be a combination of a hardware system having no instruction execution function and a hardware system having an instruction execution function. Some steps of the model distillation method provided in embodiments of this application may alternatively be implemented by using the hardware system that is in the training device 520 and that has no instruction execution function. This is not limited herein.

It should be understood that there may be a plurality of training devices (each of the training devices is used as a computing node).

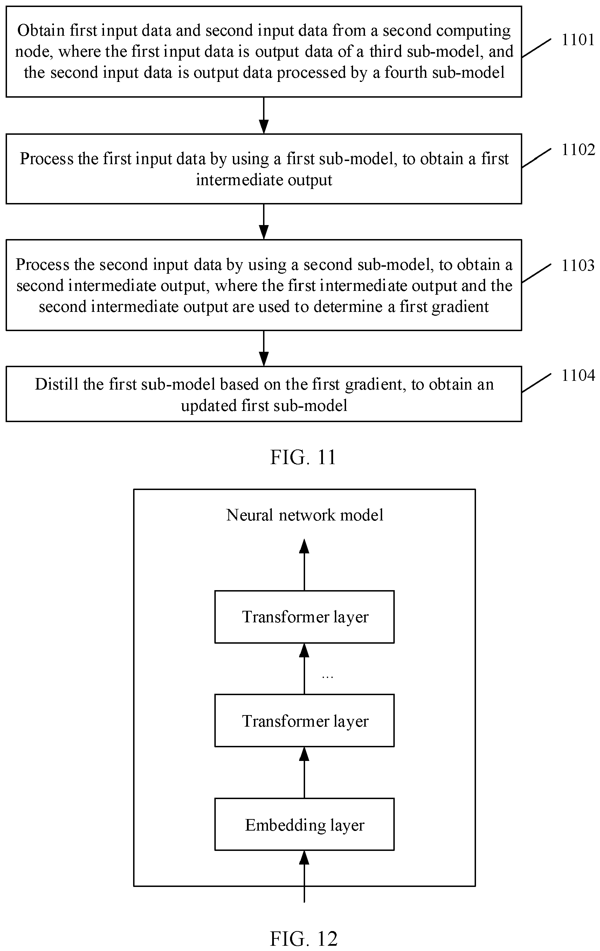

FIG. 11 is a schematic diagram of an embodiment of a model distillation method according to an embodiment of this application. The model distillation method provided in this embodiment of this application may be applied to a first computing node. The first computing node may be a terminal device such as a mobile phone, a tablet computer, a notebook computer, or a smart wearable device. Alternatively, the first computing node may be a device having a data processing capability, for example, a server or a chip. As shown in FIG. 11, the model distillation method provided in this embodiment of this application includes the following steps.

1101: Obtain first input data and second input data from a second computing node, where the first input data is output data of a third sub-model, and the second input data is output data processed by a fourth sub-model.

A first sub-model and a second sub-model may be deployed on the first computing node. The first sub-model is a partial model of a student model, and the student model may include the third sub-model connected to the first sub-model. The second sub-model is a partial model of a teacher model, and the teacher model further includes the fourth sub-model connected before the second sub-model. The first computing node is communicatively connected to the second computing node. The third sub-model and the fourth sub-model may be deployed on the second computing node.

That the first computing node includes a first sub-model and a second sub-model may be understood as that the first computing node may store the first sub-model and the second sub-model (a storage position may be in the first computing node, or may be outside the first computing node. For details, refer to the descriptions of the training device in the foregoing embodiment).

That the second computing node includes the third sub-model and the fourth sub-model may be understood as that the second computing node may store the third sub-model and the fourth sub-model (a storage position may be in the second computing node, or may be outside the second computing node. For details, refer to the descriptions of the training device in the foregoing embodiment).

In this embodiment of this application, a computing node cluster may perform knowledge distillation on the student model based on the teacher model. Each computing node may be responsible for distillation of a part of the student model, and all the computing nodes may coordinate with each other to distill the student model. The computing node cluster may include a plurality of computing nodes connected in series. The plurality of computing nodes connected in series may include the first computing node and the second computing node. The first computing node and the second computing node are communicatively connected.

The student model may be obtained by compressing the teacher model. For example, the student model may be obtained by pruning the teacher model. For example, the student model may be obtained by quantizing the teacher model.

The student model and the teacher model are described below.

In a possible implementation, the terminal device may send performance requirement information for compression to a device on a cloud side. Specifically, the terminal device may send a request for obtaining an NLP-related task model to the device on the cloud side, and upload the performance requirement information to be met. The performance requirement information includes but is not limited to at least one of a precision requirement, a latency requirement, or a model compression ratio requirement.

A pruning operation is used as an example. In a possible implementation, the device on the cloud side may store an initial neural network model (teacher model, where the model may be a model that has high data processing precision and that is prestored on the cloud side, or may be specified by a user) based on a transformer structure. After receiving the performance requirement information sent by the terminal device, the device on the cloud side may determine, based on the received performance requirement information, size information suitable for a model (student model). Specifically, when the performance requirement information includes a high precision requirement, it may be determined that the student model has a large size. When the performance requirement information includes a high latency requirement, it may be determined that a small size is suitable for the student model. When the performance requirement information includes a large model compression ratio, it may be determined that a large size is suitable for the student model. Specifically, the device on the cloud side may determine the size information of the student model based on a preset function relationship, or determine the size information of the student model based on a preset correspondence (for example, in a table lookup manner).

FIG. 12 is a schematic diagram of a structure of a neural network model according to an embodiment of this application. As shown in FIG. 12, the neural network model based on a transformer layer may include an embedding layer and a plurality of transformer layers that are sequentially connected. As understood by a person skilled in the art, a transformer model is mostly used to execute a natural language processing NLP task. It should be understood that the structure in FIG. 12 is merely an example, and a quantity of transformer layers may be set as required. The neural network model determines, based on N output vectors obtained at the transformer layers, feature vectors corresponding to a current node.

At the embedding layer, embedding processing is performed on a current input, to obtain a plurality of feature vectors. A core characteristic of the transformer model is a unique attention mechanism used by the transformer model. During processing of a natural language, for example, a sentence, the transformer model uses the attention mechanism to assign different attention coefficients to word vectors in the sentence. Therefore, impact of context on words in the sentence is considered more comprehensively. At the embedding layer, N embedding vectors $X_l$ are obtained based

on node features and position code of nodes in a current sequence. An attention layer is connected to the embedding layer. The N embedding vectors are obtained from the embedding layer and used as input vectors; the input vectors are aggregated based on a degree of correlation between the N input vectors, to obtain N output vectors; and the N output vectors are output to a following transformer layer. At the transformer layer, an output of a previous layer is obtained and used as an input vector, and an operation similar to that of a previous level of transformer layer is performed.

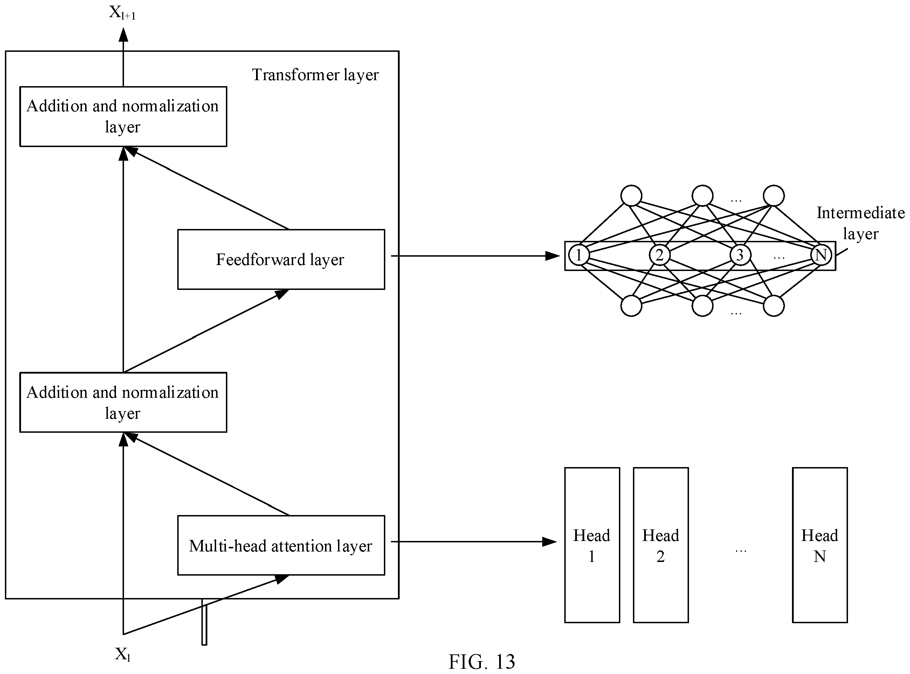

FIG. 13 is a schematic diagram of a structure of a transformer layer. For transformer layers in neural networks in embodiments of this application, refer to the structure shown in FIG. 13. As shown in FIG. 13, the transformer layer includes a multi-head attention layer, an addition and normalization (add & norm) layer, a feedforward (feedforward) layer, and an addition and normalization layer that are sequentially adjacent to each other.

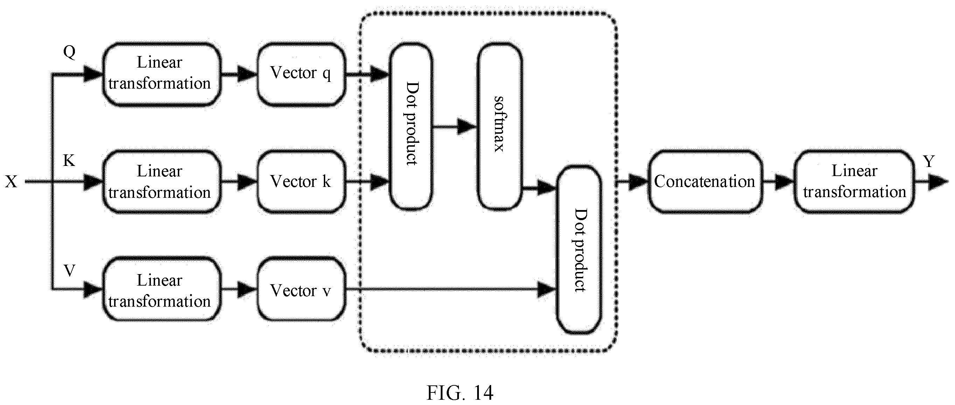

At the multi-head attention layer, N input vectors $X_l$ are obtained from a layer preceding the multi-head attention layer, and may be represented as a matrix X; and the vectors are transformed based on a degree of correlation between the vectors by using a self-attention mechanism, to obtain N output vectors that may be represented as a matrix Y It may be understood that when the multi-head attention layer is a layer directly connected to the embedding layer, for example, the transformer layer directly connected to the embedding layer in FIG. 13, the input vector obtained by the multi-head attention layer is an embedding vector that is output by the embedding layer. When the multi-head attention layer is a multi-head attention layer included in a following transformer layer, for example, a multi-head attention layer included in a transformer layer directly connected to a previous level of transformer layer in FIG. 13, the input vector obtained by the multi-head attention layer is an output vector of the previous level of transformer layer. At the multi-head attention layer, an MHA layer based on multi-head attention (multi-head attention, MHA) includes a plurality of attention heads heads (for example, a head 1, a head 2, ..., and a head N shown in FIG. 14).

FIG. 14 is a schematic diagram of an operation of an attention head head. The schematic diagram shows how the attention head head transforms an input matrix X into an output matrix Y. As shown in FIG. 14, each input vector Xi in N input vectors <X1, X2, ..., XN> is transformed by using a first transformation matrix Q, a second transformation matrix K, and a third transformation matrix V separately, to obtain a first intermediate vector (a vector q), a second intermediate vector (a vector k), and a third intermediate vector (a vector v) that correspond to each input vector. When an operation is performed, linear transformation may be performed, by using the first transformation matrix Q, the second transformation matrix K, and the third transformation matrix V separately, on an input matrix X that includes the N input vectors, to obtain a matrix Q, a matrix K, and a matrix V of the input matrix; and then the matrices are separately decomposed, to obtain the vector q, the vector k, and the vector v that correspond to each input vector. For any $i^{th}$ input vector Xi in the N input vector, a degree of correlation between the $i^{th}$ input vector Xi and each input vector Xj is determined based on a dot product operation of a first intermediate vector (a vector q, qi) corresponding to the $i^{th}$ input vector and a second intermediate vector (a vector k, kj) corresponding to each input vector Xj. A dot product result of qi and kj may be directly determined as the degree of correlation. However, more typically, the dot product result is first divided by a constant, then a softmax operation is performed, and an operation result is used as the degree of correlation between the input vectors Xi and Xj, as shown in the following formula:

$$\alpha_{i,j} = softmax\left(\frac{q_i \cdot k_j}{\sqrt{d_k}}\right)$$

Then, each degree $\alpha i, j$ of correlation between the $i^{th}$ input vector Xi and each input vector Xj may be used as a weighting factor, and weighted combination is performed on a third intermediate vector (a vector v, vj) corresponding to each input vector Xj, to obtain an $i^{th}$ combined vector Ci corresponding to the $i^{th}$ input vector Xi, as shown in the following formula:

$$C_i = \sum_{j=1}^{N} \alpha_{i,j} v_j$$

Then, a vector sequence <C1, C2, ..., CN> or a matrix C of N combined vectors corresponding to the N input vectors may be obtained. N output vectors may be obtained based on the sequence of the combined vectors. Specifically, in an embodiment, the vector sequence of the N combined vectors may be directly used as the N output vectors, that is, Yi = Ci. In this case, an output matrix Y is the combined vector matrix C, and may also be written as follows:

$$Y = softmax\left(\frac{QK^T}{\sqrt{d_k}}\right)V$$

A processing process of an attention head head is described above. In an MHA architecture, the MHA layer maintains m sets of transformation matrices, and each set of transformation matrices includes the first transformation matrix Q, the second transformation matrix K, and the third transformation matrix V Therefore, the foregoing operations may be performed in parallel, to obtain m combined vector sequences (namely, m matrices C). Each vector sequence includes N combined vectors obtained based on one set of transformation matrices. In this case, at the MHAlayer, the obtained m combined vector sequences are concatenated, to obtain a concatenated matrix; and then the concatenated matrix is transformed by using a fourth transformation matrix W, to obtain the final output matrix Y Corresponding N output vectors <Y1, Y2, ..., YN> are obtained by decomposing the output matrix Y In the foregoing operation process, at the MHA layer, a transformation operation is performed based on a degree of correlation between the N input vectors, to obtain the N output vectors.

As shown in FIG. 13, the transformer layer includes the feedforward layer. The feedforward layer includes an input layer, an intermediate layer intermediate layer, and an output layer. The intermediate layer includes a plurality of neurons.

As described above, the neural network model may include a plurality of transformer layers. In an embodiment, the plurality of transformer layers may be stacked and connected in a residual network manner, to form the neural network model.

When there are a plurality of transformer layers, in an embodiment, the neural network model may aggregate N output vectors obtained at each of the plurality of transformer layers, to obtain feature vectors corresponding to a current node. In another embodiment, the neural network model may extract only N output vectors obtained at a last transformer layer, and aggregate the N output vectors, to obtain feature vectors of a current node.

In this embodiment of this application, the device on the cloud side may store the neural network model (teacher model) based on a transformer structure. After receiving the performance requirement information sent by the terminal device, the device on the cloud side may determine the size information of the student model based on the received performance requirement information. The size information may include a width size and a depth size of the student model. Specifically, width size information may include a quantity of attention heads included in each transformer layer in the neural network model and a quantity of neurons included in the intermediate layer intermediate layer in the feedforward layer, and depth size information may include a quantity of transformer layers included in the neural network model.

In this embodiment of this application, calculation in a multi-head attention mechanism may be split into calculation of each attention head, and then calculation results are added. Therefore, the MHA layer may be scaled based on a quantity of attention heads. A quantity of neurons included in an intermediate layer intermediate layer in a fully-connected network (feedforward layer) is changed, so that the intermediate layer intermediate layer in the fully-connected network (feedforward layer) is also scalable. For a transformer layer, a width may be scaled based on an attention head in MHA and a neuron at an intermediate layer in a feedforward layer. For example, if a BERT base model has 12 attention heads, there may be 12 options for scaling a corresponding width size, that is, a width may be any one of 1, 2, ..., and 12. Similarly, any quantity of neurons may be retained at an intermediate layer in a feedforward layer.

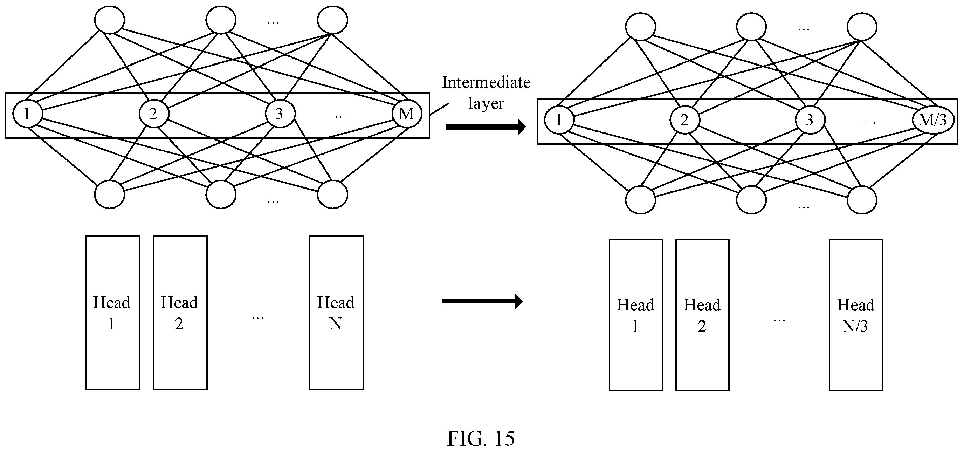

For example, FIG. 15 is a schematic diagram of width scaling of a model according to an embodiment of this application. As shown in FIG. 15, before scaling, an intermediate layer in a transformer layer included in a first neural network model includes M neurons, and an MHA layer includes N attention heads. A second neural network model is obtained after width scaling is performed on the first neural network model. The second neural network model includes a transformer layer corresponding to the transformer layer included in the first neural network model, an intermediate layer in the transformer layer includes M/3 neurons, and an MHA layer includes N/3 attention heads.

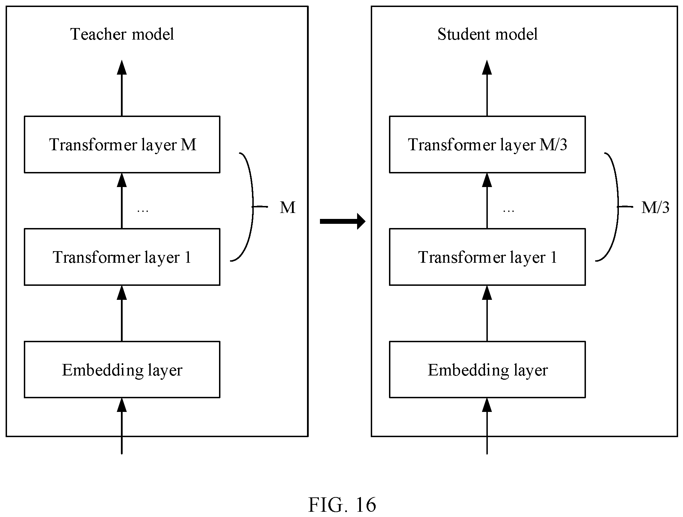

For example, FIG. 16 is a schematic diagram of depth scaling of a model according to an embodiment of this application. Before compression, a teacher model includes M transformer layers, and a quantity of transformer layers in a student model obtained after compression is reduced to M/3.

In this embodiment of this application, the student model may include the first sub-model and the third sub-model. An output of the third sub-model is used as an input to the first sub-model, that is, the first sub-model and the third sub-model are partial models of the student model, and the third sub-model is a model, in the student model, connected before the first sub-model.

In this embodiment of this application, the teacher model may include the second sub-model and the fourth sub-model. An output of the fourth sub-model is used as an input to the second sub-model, that is, the second sub-model and the fourth sub-model are partial models of the teacher model, and the fourth sub-model is a model, in the teacher model, connected before the second sub-model.

In a possible implementation, the student model and the teacher model may be transformer models, the first sub-model and the second sub-model each may include one or more transformer layers, and correspondingly, the third sub-model and the fourth sub-model each may include one or more transformer layers. Specifically, the transformer model may be divided into a plurality of modules (a quantity may be determined based on a quantity of nodes in the computing node cluster or a training speed requirement). Each module includes one or more transformer layers, and each computing node in the computing node cluster may be responsible for compression of one module.

All transformer layers in each module may be minimized during distillation. Compared with a previous local supervised learning signal, this partitioning manner allows for a larger granularity and takes into account internal layer-by-layer dependency to a greater extent. In addition, module-based division allows a new model parallel policy to be designed to further accelerate training. Each module is allocated to a different computing node. Therefore, all the modules can be trained in parallel. This significantly reduces a training time compared with previous sequential training.

Based on a serial connection sequence of the computing nodes, the modules obtained by dividing the transformer model (student model) may be deployed in a connection sequence in the transformer model.

For example, the transformer model (student model, where the student model is obtained by quantizing the teacher model and pruning a width, that is, a quantity of transformer layers remains unchanged, and the pruning a width may be pruning a quantity of attention heads, pruning a quantity of neurons in an intermediate layer, or the like) may include a transformer layer A1, a transformer layer A2, a transformer layer A3, a transformer layer A4, a transformer layer A5, a transformer layer A6, a transformer layer A7, a transformer layer A8, a transformer layer A9, a transformer layer A10, a transformer layer A11, and a transformer layer A12. The computing node cluster may include a computing node 1, a computing node 2, and a computing node 3. The computing node 1 is connected to the computing node 2, and the computing node 2 is connected to the computing node 3. The transformer model may be divided into three modules: a module A1 (including the transformer layer A1, the transformer layer A2, the transformer layer A3, and the transformer layer A4), a module A2 (including the transformer layer A5, the transformer layer A6, the transformer layer A7, and the transformer layer A8), and a module A3 (including the transformer layer A9, the transformer layer A10, the transformer layer A11, and the transformer layer A12). The computing node 1 may be responsible for knowledge distillation of the module A1, the computing node 2 may be responsible for knowledge distillation of the module A2, and the computing node 3 may be responsible for knowledge distillation of the module A3.

Similarly, the transformer model (teacher model) may include a transformer layer B1, a transformer layer B2, a transformer layer B3, a transformer layer B4, a transformer layer B5, a transformer layer B6, a transformer layer B7, a transformer layer B8, a transformer layer B9, a transformer layer B10, a transformer layer B11, and a transformer layer B12. The computing node cluster may include the computing node 1, the computing node 2, and the computing node 3. The computing node 1 is connected to the computing node 2, and the computing node 2 is connected to the computing node 3. The transformer model may be divided into three modules: a module 1 (including the transformer layer B1, the transformer layer B2, the transformer layer B3, and the transformer layer B4), a module 2 (including the transformer layer B5, the transformer layer B6, the transformer layer B7, and the transformer layer B8), and a module 3 (including the transformer layer B9, the transformer layer B10, the transformer layer B11, and the transformer layer B12). The computing node 1 may be responsible for knowledge distillation of the module A1 (based on the module A1 and the module B1), the computing node 2 may be responsible for knowledge distillation of the module A2 (based on the module A2 and the module B2), and the computing node 3 may be responsible for knowledge distillation of the module A3 (based on the module A3 and the module B3).

For example, the transformer model (student model, where the student model is obtained by pruning a depth of the teacher model, that is, a quantity of transformer layers is decreased) may include a transformer layer A1, a transformer layer A2, a transformer layer A3, a transformer layer A4, a transformer layer A5, and a transformer layer A6. The computing node cluster may include a computing node 1, a computing node 2, and a computing node 3. The computing node 1 is connected to the computing node 2, and the computing node 2 is connected to the computing node 3. The transformer model may be divided into three modules: a module A1 (including the transformer layer A1 and the transformer layer A2), a module A2 (including the transformer layer A3 and the transformer layer A4), and a module A3 (including the transformer layer A5 and the transformer layer A6). The computing node 1 may be responsible for knowledge distillation of the module A1, the computing node 2 may be responsible for knowledge distillation of the module A2, and the computing node 3 may be responsible for knowledge distillation of the module A3.

Similarly, the transformer model (teacher model) may include a transformer layer B1, a transformer layer B2, a transformer layer B3, a transformer layer B4, a transformer layer B5, a transformer layer B6, a transformer layer B7, a transformer layer B8, a transformer layer B9, a transformer layer B10, a transformer layer B11, and a transformer layer B12. The computing node cluster may include the computing node 1, the computing node 2, and the computing node 3. The computing node 1 is connected to the computing node 2, and the computing node 2 is connected to the computing node 3. The transformer model may be divided into three modules: a module 1 (including the transformer layer B1, the transformer layer B2, the transformer layer B3, and the transformer layer B4), a module 2 (including the transformer layer B5, the transformer layer B6, the transformer layer B7, and the transformer layer B8), and a module 3 (including the transformer layer B9, the transformer layer B10, the transformer layer B11, and the transformer layer B12). The computing node 1 may be responsible for knowledge distillation of the module A1 (based on the module A1 and the module B1), the computing node 2 may be responsible for knowledge distillation of the module A2 (based on the module A2 and the module B2), and the computing node 3 may be responsible for knowledge distillation of the module A3 (based on the module A3 and the module B3).

When knowledge distillation is performed on the student model based on the teacher model, there may be a feedforward process and a gradient back propagation process each time iterative training is performed. The feedforward process is a process of processing a training sample by using the student model and the teacher model. The teacher model and the student model in this embodiment of this application each are divided into a plurality of modules for which different computing nodes are respectively responsible. Therefore, each computing node may obtain a calculation result of a previous level of connected computing node (the first computing node may obtain the training sample), perform an operation on the calculation result of the previous level of connected computing node based on a module for which each computing node is responsible, and transfer the calculation result to a next level of connected computing node. In addition, a serial connection sequence of the computing nodes is consistent with an arrangement of network layers in the model. Therefore, from an overall perspective of the plurality of nodes, the feedforward process is still equivalent to a process of processing a training sample by using a complete student model and a complete teacher model.

In this embodiment of this application, each computing node is configured to perform feedforward (or referred to as forward propagation) based on a partial network for which the computing node is responsible, to obtain output data. Each computing node may implement flowing of the output data based on a serial sequence. The first computing node and the second computing node are used as an example. In a feedforward process, the second computing node may process data by using the third sub-model, to obtain the first input data, and the first input data may be used as an input to the first sub-model. In this way, the first computing node may obtain the first input data. Similarly, the second computing node may process data by using the fourth sub-model, to obtain the second input data, and the second input data may be used as an input to the second sub-model. In this way, the first computing node may obtain the second input data.

A manner of obtaining the first input data is described below.

In an actual application, times for all the computing nodes to perform feedforward processes of network layers for which the computing nodes are responsible are not uniform. To further reduce a waiting time between different computing nodes, during forward propagation, a current computing node does not wait for a previous computing node to complete calculation before starting calculation.

In a possible implementation, an output queue I may be deployed between adjacent computing nodes (for example, an $n^{th}$ computing node and an $(n+1)^{th}$ computing node) to collect outputs $I_n^t = \{f_{l_n}^t, f_{l_n}^{t-1}, \ldots, f_{l_n}^{t-t_0}\}$ of the $n^{th}$ computing node in latest $t_0$ steps. The input queue has a preset memory size, and is updated by following first in first out (first input first output, FIFO). The $(n+1)^{th}$ computing node can always obtain $f_{l_n}^t$ from the queue $I_n^t$ as an input of the computing node without waiting. Such a design can avoid a problem of load imbalance from a laggard module, and implement a linear acceleration ratio that is close to a theoretical ratio of N-fold acceleration implemented by using N training devices.

For example, the $n^{th}$ computing node is the second computing node, and the $(n+1)^{tn}$ computing node is the first computing node. A first queue (for the student model) may be deployed between the second computing node and the first computing node. The second computing node may store output data (including the first input data) in the first queue. In this way, the first computing node may obtain the first input data from the first queue. The first queue is used to store at least one piece of first data from the second computing node. Each piece of first data is an output obtained by the second computing node by processing input data by using the third sub-model.

In a possible implementation, the first computing node is further communicatively connected to a third computing node, a third queue may be deployed (for example, deployed at a storage position between the first computing node and the third computing node, deployed on the first computing node, or deployed on the third computing node), and the student model further includes a fifth sub-model connected after the first sub-model. After the first computing node processes the first input data by using the first sub-model, a first intermediate output obtained through processing may be stored in the third queue (an execution body of the storage action is not limited to the first computing node), that is, the first intermediate output may be transferred to the third queue, and the third queue is used to store the first intermediate output, so that the third computing node obtains the first intermediate output from the third queue. The first intermediate output is used as input data in a feedforward process existing when model distillation is performed on the third sub-model.

An occasion of obtaining the first input data is described below.

In an existing gradient back propagation process of knowledge distillation, update is gradually performed from an output layer to an input layer, and update of a previous level of network layer depends on completion of update of a current level of network layer. Therefore, when update of a network layer of one or more current levels of computing nodes is not completed, a large quantity of computing nodes are in a resource idle state. For example, a computing node 1 is responsible for distillation of a network layer 1, a computing node 2 is responsible for distillation of a network layer 2, and the network layer 2 is connected after the network layer 1. In a feedforward process, an output of the network layer 1 is used as an input of the network layer 2. During gradient back propagation, the network layer 1 is updated only after the network layer 2 is updated. That is, before the computing node 2 completes update of the network layer 2, the computing node 1 cannot update the network layer 1. An inventive idea of this embodiment of this application is that a gradient back propagation process of each computing node is internally performed, there is no dependency on one next level of computing node (or N next levels of computing nodes, where N is greater than 1) to complete distillation of a network layer for which each computing node is responsible, and a gradient calculated by each computing node is not back-propagated to a previous level of computing node. Therefore, based on asynchronous parallel training, higher utilization of computing resources is achieved, and further a distillation process is accelerated.

There is no dependency between distillation processes of all the computing nodes. Therefore, after completing an update process of gradient back propagation, the computing node may directly obtain a next piece of input data and perform feedforward without waiting, and does not need to wait for completion of a feedforward process of a previous level of computing node because the next piece of input data is already stored in a queue deployed with the previous level of computing node. This further improves utilization of computing resources of the computing node, and accelerates the distillation process.

The first computing node is used as an example. In a previous iteration, the first computing node may distill a network layer in a student network for which the first computing node is responsible, to obtain the first sub-model, and directly obtain the first input data from the first queue in response to obtaining the first sub-model. After the first sub-model is distilled, based on the fact that an updated first sub-model is obtained, third input data (namely, a next piece of input data) may be obtained from the first queue, and then a feedforward process existing when model distillation is performed on the updated first sub-model may be performed based on the third input data.

Similarly, for the teacher model, an output queue may be deployed. For example, the $n^{th}$ computing node is the second computing node, and the $(n+1)^{th}$ computing node is the first computing node. A second queue may be deployed (for the teacher model, a deployment position may be a storage position between the first computing node and the second computing node, or the second queue is deployed on the first computing node or the second computing node). The second computing node may store output data (including the second input data) in the second queue. In this way, the first computing node may obtain the second input data from the second queue. The second queue is used to store at least one piece of second data from the second computing node. Each piece of second data is an output obtained by the second computing node by processing data by using the fourth sub-model.

1102: Process the first input data by using the first sub-model, to obtain a first intermediate output.

1103: Process the second input data by using the second sub-model, to obtain a second intermediate output, where the first intermediate output and the second intermediate output are used to determine a first gradient.

A feedforward process performed by the first computing node based on the input data is described in step 1102 and step 1103. For the student model (the first sub-model) for which the first computing node is responsible, the first input data may be processed by using the first sub-model, to obtain the first intermediate output. For the teacher model (the second sub-model) for which the first computing node is responsible, the second input data may be processed by using the second sub-model, to obtain the second intermediate output.

In a possible implementation, the first sub-model and the second sub-model each may include a plurality of network layers (for example, a plurality of transformer layers), the first intermediate output may be an output of a last layer (namely, a network layer closest to an output layer in the student model) in the first sub-model, and correspondingly, the second intermediate output may be an output of a last layer (namely, a network layer closest to an output layer in the teacher model) in the second sub-model.

For the $n^{th}$ computing node, it is assumed that a parameter that can be learned in a small model (a partial model, of the student model, for which the $n^{th}$ computing node is responsible) for which the $n^{th}$ computing node is responsible is $w_n$, and a training objective function of the $n^{th}$ computing node is to minimize a distance $L^{(n)}$ between a feature of a compressed small model and a feature of an uncompressed large model (a partial model, of the teacher model, for which the $n^{th}$ computing node is responsible). For the $n^{th}$ computing node, a common feature of constructing a loss function is a final output of the computing node. If $f_{ln+1-1}$ and $\hat{f}_{ln+1-1}$ are respectively outputs of the $n^{th}$ computing node before and after model compression, the training objective function of the $n^{th}$ computing node may be expressed as follows:

$$\min_{w_n} L^{(n)} = \sum_{l \in [l_n, l_{n+1})} \left\| \hat{f}_{l_{n+1}-1} - f_{l_{n+1}-1} \right\|^2$$

In a possible implementation, the first intermediate output may alternatively be an output of each layer in the first sub-model, and correspondingly, the second intermediate output may be an output of each layer in the second sub-model. For a compression method (for example, model quantization or pruning in a width direction) in which a quantity of network layers (for example, transformer layers) is not changed, a common feature of constructing a loss function is an output of each network layer (for example, transformer layer) in each computing node. If $f_l$ and $\hat{f}_l$ are respectively outputs of an $l^{\text{th}}$ transformer layer before and after compression, the objective function of the $n^{\text{th}}$ computing node may be expressed as follows:

$$\min_{w_n} L^{(n)} = \sum_{l \in [l_n, l_{n+1})} \left\| \hat{f}_l - f_l \right\|^2$$

In this embodiment of this application, after the first intermediate output and the second intermediate output are obtained, a loss may be constructed based on the first intermediate output and the second intermediate output, and the first gradient is determined based on the loss. The first gradient may be used to update the first sub-model.

It should be understood that in a possible implementation, the first sub-model does not include the output layer in the student model, and correspondingly, the second sub-model does not include the output layer in the teacher model. When the first sub-model includes the output layer in the student model, and the second sub-model includes the output layer in the teacher model, the first computing node does not need to wait for gradient back propagation of a next level of computing node (the first computing node is a last level of computing node).

1104: Distill the first sub-model based on the first gradient, to obtain an updated first sub-model.

In an existing gradient back propagation process of knowledge distillation, update is gradually performed from an output layer to an input layer, and update of a previous level of network layer depends on completion of update of a current level of network layer. Therefore, when update of a network layer of one or more current levels of computing nodes is not completed, a large quantity of computing nodes are in a resource idle state. For example, a computing node 1 is responsible for distillation of a network layer 1, a computing node 2 is responsible for distillation of a network layer 2, and the network layer 2 is connected after the network layer 1. In a feedforward process, an output of the network layer 1 is used as an input of the network layer 2. During gradient back propagation, the network layer 1 is updated only after the network layer 2 is updated. That is, before the computing node 2 completes update of the network layer 2, the computing node 1 cannot update the network layer 1. In this embodiment of this application, a gradient back propagation process of each computing node is internally performed, there is no dependency on one next level of computing node (or N next levels of computing nodes, where N is greater than 1) to complete distillation of a network layer for which each computing node is responsible, and a gradient calculated by each computing node is not back-propagated to a previous level of computing node (for the first gradient obtained by the first computing node, the first gradient is used only to update the first sub-model, and may not be back-propagated to the second computing node, that is, is not used when the second computing node distills a network layer for which the second computing node is responsible), to achieve higher utilization of computing resources, and accelerate a distillation process.

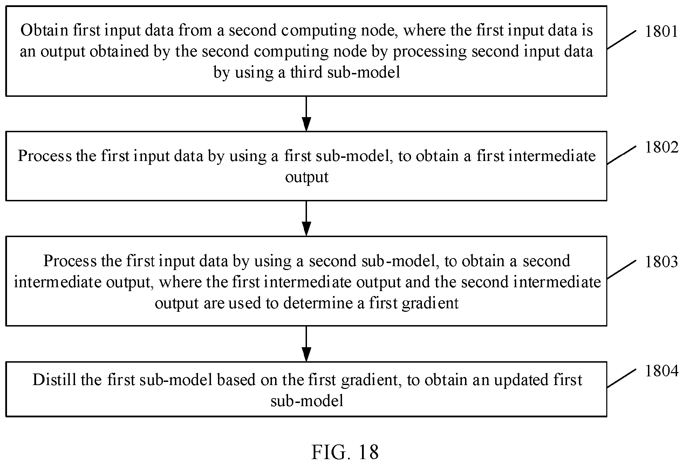

It should be understood that in the asynchronous parallel training process described above, an error generated by the student model is propagated layer by layer (propagated during feedforward). During parallel training, if training of a previous segment is not completed, a current segment is affected by the previous segment. In addition, a queue is used, so that computing nodes may not need to wait for each other. However, non-sequential calculation brings a larger error to the model than common pipeline parallel training. Therefore, in an implementation, the teacher model may be used to mitigate error accumulation caused by the student model. Specifically, when distillation training starts, input data obtained by the computing node may be an output of a teacher model of a previous level of connected computing node (when distillation starts, an error of the student model is excessively large, and an input to the teacher model is more accurate. In this embodiment of this application, the error is propagated layer by layer, and therefore a convergence speed of the student model is very low. At the beginning, the output of the teacher model is used as an input, so that error propagation during feedforward can be reduced, and the convergence speed of the student model can be increased). As the training proceeds, a change is gradually made to use a sample of an output queue of the student model as an input, to maintain consistency with an inference phase (only the student model is used). For details, refer to FIG. 18 and descriptions in the corresponding embodiment. Details are not described herein.

In specific implementation, a convex combination between a queue $f_{l_n}^t$ corresponding to the teacher model and a queue $\hat{f}_{l_n}^t$ corresponding to the student model may be used as an input of the (n+1)th computing node, and a coefficient $\lambda$ is controlled to change from 1 to 0 in a training process. This may be expressed as follows:

$$\tilde{f}_{l_n}^t = (1 - \lambda)\hat{f}_{l_n}^t + \lambda f_{l_n}^t$$

Many attenuation functions may be used to change $\lambda$ from 1 to 0 in the training process. It is assumed that a total quantity of iterations of training is $T_0$, and common linear attenuation may be expressed as follows:

$$\lambda_t = max(1 - t/T_0, 0)$$

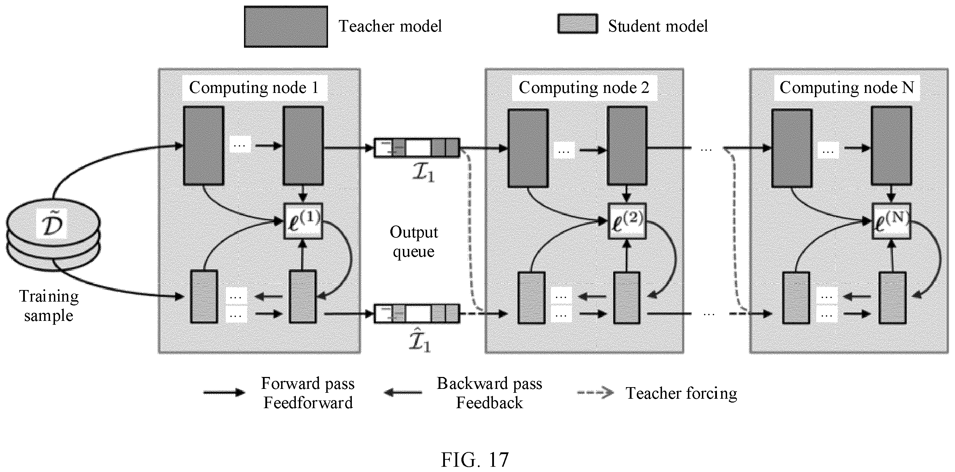

FIG. 17 is a schematic diagram of a system. To accelerate compression training, modules of a model may be placed on N computing devices. A training set D is provided, and during forward propagation in a small network, each block separately calculates a loss $L_n$ of a module of the block, where n=1, ..., and N. In back propagation, there is a limitation that a gradient of each module is propagated only locally within the module, and is not propagated to a previous module. A quantity N of modules may be adjusted based on a memory limit of a computing resource. In addition, it is recommended that the model should be evenly partitioned to ensure balanced memory usage between different modules.

A student network is obtained through quantization. When distillation provided in embodiments of this application is used, compared with common non-parallel quantization training, the parallel training method significantly increases a training speed (at least a 100-fold increase), consumes only 1/3 of a video memory, depends on 4096 pieces of training data, and causes a slight reduction in accuracy of a final compressed model. An effect may be shown in the following table:

| | #Bits (W-E-A) | Quant method | BERT base | | | | | BERT large | | | | |
|---|---|---|---|---|---|---|---|---|---|---|---|---|
| | | | Time (min) | Mem (G) | # Data (K) | Acc m (%) | Acc mm (%) | Time (min) | Mem (G) | # Data (K) | Acc m (%) | Acc mm (%) |
| MNLI | *full-prec* | N/A | 220 | 8.6 | 393 | 84.5 | 84.9 | 609 | 21.5 | 393 | 86.7 | 85.9 |
| | 4-4-8 | QAT | 1320 | 11.9 | 393 | 84.6 | 84.9 | 3180 | 29.8 | 393 | 86.9 | 86.7 |
| | | BQEM-S | 36 | 4.6 | 4 | $83.5_{\pm0.1}$ | $84.0_{\pm0.1}$ | 84 | 10.8 | 4 | $85.8_{\pm0.1}$ | $85.8_{\pm0.1}$ |
| | | BQEM-P | 9 | 3.7 | 4 | $83.3_{\pm0.1}$ | $83.8_{\pm0.1}$ | 21 | 8.6 | 4 | $85.6_{\pm0.2}$ | $85.6_{\pm0.1}$ |
| | 2-2-8 | QAT | 882 | 11.9 | 393 | 84.4 | 84.6 | 2340 | 29.8 | 393 | 86.5 | 86.1 |
| | | BQEM-S | 24 | 4.6 | 4 | $82.4_{\pm0.2}$ | $82.6_{\pm0.1}$ | 64 | 10.8 | 4 | $85.0_{\pm0.2}$ | $85.3_{\pm0.2}$ |
| | | BQEM-P | 6 | $3.7_{\times4}$ | 4 | $82.3_{\pm0.1}$ | $82.4_{\pm0.1}$ | 16 | $8.6_{\times4}$ | 4 | $84.8_{\pm0.2}$ | $84.9_{\pm0.2}$ |
| | 2-2-4 | QAT | 875 | 11.9 | 393 | 83.5 | 84.2 | 2280 | 29.8 | 393 | 85.8 | 85.9 |
| | | BQEM-S | 24 | 4.6 | 4 | $80.2_{\pm0.2}$ | $80.5_{\pm0.2}$ | 64 | 10.8 | 4 | $82.7_{\pm0.2}$ | $83.3_{\pm0.1}$ |
| | | BQEM-P | 6 | $3.7_{\times4}$ | 4 | $80.2_{\pm0.3}$ | $80.8_{\pm0.2}$ | 16 | $8.6_{\times4}$ | 4 | $82.6_{\pm0.3}$ | $83.2_{\pm0.2}$ |

In addition, an embodiment of this application further provides a computing node cluster, including a plurality of computing nodes connected in series. The plurality of computing nodes are configured to perform knowledge distillation on a student network. Each computing node is configured to be responsible for knowledge distillation of a partial network in the student network. Each computing node is configured to perform feedforward based on the partial network for which the computing node is responsible, to obtain output data.

Each computing node is further configured to: determine a gradient based on the data obtained by performing feedforward based on the partial network for which the computing node is responsible, and perform gradient back propagation inside each computing node, to distill the partial network for which the computing node is responsible. The gradient determined by each computing node is not transferred to a connected computing node.

In a possible implementation, a student model is a transformer model, and a partial model includes one or more transformer layers.

In a possible implementation, the output data may be transferred to a first in first out queue between connected computing nodes, so that the connected computing nodes obtain the output data from the first in first out queue.

An embodiment of this application provides a model distillation method. The method is applied to a first computing node. A first sub-model and a second sub-model are deployed on the first computing node. The first sub-model is a partial model of a student model, and the student model further includes a third sub-model connected to the first sub-model. The second sub-model is a partial model of a teacher model, and the teacher model further includes a fourth sub-model connected to the second sub-model. The first computing node is communicatively connected to a second computing node. The third sub-model and the fourth sub-model are deployed on the second computing node. The method includes: obtaining first input data and second input data from the second computing node, where the first input data is output data of the third sub-model, and the second input data is output data processed by the fourth sub-model; processing the first input data by using the first sub-model, to obtain a first intermediate output; processing the second input data by using the second sub-model, to obtain a second intermediate output, where the first intermediate output and the second intermediate output are used to determine a first gradient; and distilling the first sub-model based on the first gradient, to obtain an updated first sub-model. In this embodiment of this application, a gradient back propagation process of each computing node is internally performed, there is no dependency on one next level of computing node (or N next levels of computing nodes, where N is greater than 1) to complete distillation of a network layer for which each computing node is responsible, and a gradient calculated by each computing node is not back-propagated to a previous level of computing node (for the first gradient obtained by the first computing node, the first gradient is used only to update the first sub-model, and may not be back-propagated to the second computing node, that is, is not used when the second computing node distills a network layer for which the second computing node is responsible), to achieve higher utilization of computing resources, and accelerate a distillation process.

FIG. 18 is a schematic diagram of a model distillation method according to an embodiment of this application. The method may be applied to a first computing node. The first computing node is communicatively connected to a second computing node. The first computing node may be a terminal device such as a mobile phone, a tablet computer, a notebook computer, or a smart wearable device. Alternatively, the first computing node may be a device having a data processing capability, for example, a server or a chip. As shown in FIG. 18, the model distillation method provided in this embodiment of this application includes the following steps.

1801: Obtain first input data from the second computing node, where the first input data is output data of a third sub-model.

A first sub-model and a second sub-model may be deployed on the first computing node. The first sub-model is a partial model of a student model. The second sub-model is a partial model of a teacher model, and the teacher model further includes the third sub-model connected to the second sub-model. The first computing node is communicatively connected to the second computing node. The third sub-model may be deployed on the second computing node.

In this embodiment of this application, a computing node cluster may perform knowledge distillation on the student model based on the teacher model. Each computing node may be responsible for distillation of a part of the student model, and all the computing nodes may coordinate with each other to distill the student model. The computing node cluster may include a plurality of computing nodes connected in series. The plurality of computing nodes connected in series may include the first computing node and the second computing node. The first computing node and the second computing node are communicatively connected.

The student model may be obtained by compressing the teacher model. For example, the student model may be obtained by pruning the teacher model. For example, the student model may be obtained by quantizing the teacher model.

In this embodiment of this application, the teacher model may include the second sub-model and the third sub-model. An output of the third sub-model is used as an input to the second sub-model, that is, the second sub-model and the third sub-model are partial models of the teacher model, and the third sub-model is a model, in the teacher model, connected before the second sub-model.

It should be understood that the fourth sub-model in the embodiment corresponding to FIG. 11 may be the third sub-model in this embodiment of this application.

In a possible implementation, the student model and the teacher model may be transformer models, the first sub-model and the second sub-model each may include one or more transformer layers, and correspondingly, the third sub-model may include one or more transformer layers. Specifically, the transformer model may be divided into a plurality of modules (a quantity may be determined based on a quantity of nodes in the computing node cluster or a training speed requirement). Each module includes one or more transformer layers, and each computing node in the computing node cluster may be responsible for compression of one module.

All transformer layers in each module may be minimized during distillation. Compared with a previous local supervised learning signal, this partitioning manner allows for a larger granularity and takes into account internal layer-by-layer dependency to a greater extent. In addition, module-based division allows a new model parallel policy to be designed to further accelerate training. Each module is allocated to a different computing node. Therefore, all the modules can be trained in parallel. This significantly reduces a training time compared with previous sequential training.

Based on a serial connection sequence of the computing nodes, the modules obtained by dividing the transformer model (student model) may be deployed in a connection sequence in the transformer model.

For example, the transformer model (student model, where the student model is obtained by quantizing the teacher model and pruning a width, that is, a quantity of transformer layers remains unchanged, and the pruning a width may be pruning a quantity of attention heads, pruning a quantity of neurons in an intermediate layer, or the like) may include a transformer layer A1, a transformer layer A2, a transformer layer A3, a transformer layer A4, a transformer layer A5, a transformer layer A6, a transformer layer A7, a transformer layer A8, a transformer layer A9, a transformer layer A10, a transformer layer A11, and a transformer layer A12. The computing node cluster may include a computing node 1, a computing node 2, and a computing node 3. The computing node 1 is connected to the computing node 2, and the computing node 2 is connected to the computing node 3. The transformer model may be divided into three modules: a module A1 (including the transformer layer A1, the transformer layer A2, the transformer layer A3, and the transformer layer A4), a module A2 (including the transformer layer A5, the transformer layer A6, the transformer layer A7, and the transformer layer A8), and a module A3 (including the transformer layer A9, the transformer layer A10, the transformer layer A11, and the transformer layer A12). The computing node 1 may be responsible for knowledge distillation of the module A1, the computing node 2 may be responsible for knowledge distillation of the module A2, and the computing node 3 may be responsible for knowledge distillation of the module A3.

Similarly, the transformer model (teacher model) may include a transformer layer B1, a transformer layer B2, a transformer layer B3, a transformer layer B4, a transformer layer B5, a transformer layer B6, a transformer layer B7, a transformer layer B8, a transformer layer B9, a transformer layer B10, a transformer layer B11, and a transformer layer B12. The computing node cluster may include the computing node 1, the computing node 2, and the computing node 3. The computing node 1 is connected to the computing node 2, and the computing node 2 is connected to the computing node 3. The transformer model may be divided into three modules: a module 1 (including the transformer layer B1, the transformer layer B2, the transformer layer B3, and the transformer layer B4), a module 2 (including the transformer layer B5, the transformer layer B6, the transformer layer B7, and the transformer layer B8), and a module 3 (including the transformer layer B9, the transformer layer B10, the transformer layer B11, and the transformer layer B12). The computing node 1 may be responsible for knowledge distillation of the module A1 (based on the module A1 and the module B1), the computing node 2 may be responsible for knowledge distillation of the module A2 (based on the module A2 and the module B2), and the computing node 3 may be responsible for knowledge distillation of the module A3 (based on the module A3 and the module B3).

For example, the transformer model (student model, where the student model is obtained by pruning a depth of the teacher model, that is, a quantity of transformer layers is decreased) may include a transformer layer A1, a transformer layer A2, a transformer layer A3, a transformer layer A4, a transformer layer A5, and a transformer layer A6. The computing node cluster may include a computing node 1, a computing node 2, and a computing node 3. The computing node 1 is connected to the computing node 2, and the computing node 2 is connected to the computing node 3. The transformer model may be divided into three modules: a module A1 (including the transformer layer A1 and the transformer layer A2), a module A2 (including the transformer layer A3 and the transformer layer A4), and a module A3 (including the transformer layer A5 and the transformer layer A6). The computing node 1 may be responsible for knowledge distillation of the module A1, the computing node 2 may be responsible for knowledge distillation of the module A2, and the computing node 3 may be responsible for knowledge distillation of the module A3.

Similarly, the transformer model (teacher model) may include a transformer layer B1, a transformer layer B2, a transformer layer B3, a transformer layer B4, a transformer layer B5, a transformer layer B6, a transformer layer B7, a transformer layer B8, a transformer layer B9, a transformer layer B10, a transformer layer B11, and a transformer layer B12. The computing node cluster may include the computing node 1, the computing node 2, and the computing node 3. The computing node 1 is connected to the computing node 2, and the computing node 2 is connected to the computing node 3. The transformer model may be divided into three modules: a module 1 (including the transformer layer B1, the transformer layer B2, the transformer layer B3, and the transformer layer B4), a module 2 (including the transformer layer B5, the transformer layer B6, the transformer layer B7, and the transformer layer B8), and a module 3 (including the transformer layer B9, the transformer layer B10, the transformer layer B11, and the transformer layer B12). The computing node 1 may be responsible for knowledge distillation of the module A1 (based on the module A1 and the module B1), the computing node 2 may be responsible for knowledge distillation of the module A2 (based on the module A2 and the module B2), and the computing node 3 may be responsible for knowledge distillation of the module A3 (based on the module A3 and the module B3).

When knowledge distillation is performed on the student model based on the teacher model, there may be a feedforward process and a gradient back propagation process each time iterative training is performed. The feedforward process is a process of processing a training sample by using the student model and the teacher model. The teacher model and the student model in this embodiment of this application each are divided into a plurality of modules for which different computing nodes are respectively responsible. Therefore, each computing node may obtain a calculation result of a previous level of connected computing node (the first computing node may obtain the training sample), perform an operation on the calculation result of the previous level of connected computing node based on a module for which each computing node is responsible, and transfer the calculation result to a next level of connected computing node.

In an existing gradient back propagation process of knowledge distillation, update is gradually performed from an output layer to an input layer, and update of a previous level of network layer depends on completion of update of a current level of network layer. Therefore, when update of a network layer of one or more current levels of computing nodes is not completed, a large quantity of computing nodes are in a resource idle state. For example, a computing node 1 is responsible for distillation of a network layer 1, a computing node 2 is responsible for distillation of a network layer 2, and the network layer 2 is connected after the network layer 1. In a feedforward process, an output of the network layer 1 is used as an input of the network layer 2. During gradient back propagation, the network layer 1 is updated only after the network layer 2 is updated. That is, before the computing node 2 completes update of the network layer 2, the computing node 1 cannot update the network layer 1. In the embodiment corresponding to FIG. 11, a gradient back propagation process of each computing node is internally performed, there is no dependency on one next level of computing node (or N next levels of computing nodes, where N is greater than 1) to complete distillation of a network layer for which each computing node is responsible, and a gradient calculated by each computing node is not back-propagated to a previous level of computing node (for the first gradient obtained by the first computing node, the first gradient is used only to update the first sub-model, and may not be back-propagated to the second computing node, that is, is not used when the second computing node distills a network layer for which the second computing node is responsible), to achieve higher utilization of computing resources, and accelerate a distillation process.

However, in the asynchronous parallel training process described above, an error generated by the student model is propagated layer by layer (propagated during feedforward). During parallel training, if training of a previous segment is not completed, a current segment is affected by the previous segment. In addition, a queue is used, so that computing nodes may not need to wait for each other. However, non-sequential calculation brings a larger error to the model than common pipeline parallel training. Therefore, in an implementation, the teacher model may be used to mitigate error accumulation caused by the student model. Specifically, when distillation training starts, input data obtained by the computing node may be an output of a teacher model of a previous level of connected computing node (when distillation starts, an error of the student model is excessively large, and an input to the teacher model is more accurate. In this embodiment of this application, the error is propagated layer by layer, and therefore a convergence speed of the student model is very low. At the beginning, the output of the teacher model (an output of the third sub-model) is used as an input (used as an input to the first sub-model), so that error propagation during feedforward can be reduced, and the convergence speed of the student model can be increased). As the training proceeds, a change is gradually made to use a sample of an output queue of the student model as an input, to maintain consistency with an inference phase (only the student model is used).

In this embodiment of this application, each computing node is configured to perform feedforward (or referred to as forward propagation) based on a partial network for which the computing node is responsible, to obtain output data. Each computing node may implement flowing of the output data based on a serial sequence. The first computing node and the second computing node are used as an example. In a feedforward process, the second computing node may process data by using the third sub-model (teacher model), to obtain the first input data, and the first input data may be used as an input to the first sub-model. In this way, the first computing node may obtain the first input data. Similarly, the second computing node may process data by using the fourth sub-model, to obtain the second input data, and the second input data may be used as an input to the second sub-model. In this way, the first computing node may obtain the second input data.

A manner of obtaining the first input data is described below.

In an actual application, times for all the computing nodes to perform feedforward processes of network layers for which the computing nodes are responsible are not uniform. To further reduce a waiting time between different computing nodes, during forward propagation, a current computing node does not wait for a previous computing node to complete calculation before starting calculation.

In a possible implementation, an output queue I may be deployed between adjacent computing nodes (for example, an $n^{th}$ computing node and an $(n+1)^{th}$ computing node) to collect outputs $I_n^t = \{f_{l_n}^t, f_{l_n}^{t-1}, \ldots, f_{l_n}^{t-t_o}\}$ of the $n^{th}$ computing node in latest $t_0$ steps. The input queue has a preset memory size, and is updated by following first in first out (first input first output, FIFO). The $(n+1)^{th}$ computing node can always obtain $f_{l_n}^t$ from the queue $I_n^t$ as an input of the computing node without waiting. Such a design can avoid a problem of load imbalance from a laggard module, and implement a linear acceleration ratio that is close to a theoretical ratio of N-fold acceleration implemented by using N training devices.

For example, the $n^{th}$ computing node is the second computing node, and the $(n+1)^{th}$ computing node is the first computing node. A first queue (for the teacher model) may be deployed between the second computing node and the first computing node. The second computing node may store output data (including the first input data) in the first queue. In this way, the first computing node may obtain the first input data from the first queue. The first queue is used to store at least one piece of first data from the second computing node. Each piece of first data is an output obtained by the second computing node by processing data by using the third sub-model.

An occasion of obtaining the first input data is described below.

In an existing gradient back propagation process of knowledge distillation, update is gradually performed from an output layer to an input layer, and update of a previous level of network layer depends on completion of update of a current level of network layer. Therefore, when update of a network layer of one or more current levels of computing nodes is not completed, a large quantity of computing nodes are in a resource idle state. For example, a computing node 1 is responsible for distillation of a network layer 1, a computing node 2 is responsible for distillation of a network layer 2, and the network layer 2 is connected after the network layer 1. In a feedforward process, an output of the network layer 1 is used as an input of the network layer 2. During gradient back propagation, the network layer 1 is updated only after the network layer 2 is updated. That is, before the computing node 2 completes update of the network layer 2, the computing node 1 cannot update the network layer 1. An inventive idea of this embodiment of this application is that a gradient back propagation process of each computing node is internally performed, there is no dependency on one next level of computing node (or N next levels of computing nodes, where N is greater than 1) to complete distillation of a network layer for which each computing node is responsible, and a gradient calculated by each computing node is not back-propagated to a previous level of computing node. Therefore, based on asynchronous parallel training, higher utilization of computing resources is achieved, and further a distillation process is accelerated.

There is no dependency between distillation processes of all the computing nodes. Therefore, after completing an update process of gradient back propagation, the computing node may directly obtain a next piece of input data and perform feedforward without waiting, and does not need to wait for completion of a feedforward process of a previous level of computing node because the next piece of input data is already stored in a queue deployed with the previous level of computing node. This further improves utilization of computing resources of the computing node, and accelerates the distillation process.

The first computing node is used as an example. In a previous iteration, the first computing node may distill a network layer in a student network for which the first computing node is responsible, to obtain the first sub-model, and directly obtain the first input data from the first queue based on the fact that the first sub-model is obtained. After the first sub-model is distilled, based on the fact that an updated first sub-model is obtained, the second input data (namely, a next piece of input data) may be obtained from the first queue, and then a feedforward process existing when model distillation is performed on the updated first sub-model may be performed based on the second input data. Alternatively, a second queue (for the student model) may be deployed between the second computing node and the first computing node. After the first sub-model is distilled, based on the fact that an updated first sub-model is obtained, fifth input data (namely, a next piece of input data) may be obtained from the first queue, and then a feedforward process existing when model distillation is performed on the updated first sub-model may be performed based on the fifth input data.

Similarly, for the teacher model, a queue may be deployed between computing nodes. For example, the $n^{th}$ computing node is the second computing node, and the $(n+1)^{th}$ computing node is the first computing node. The first computing node may obtain the first input data from the first queue. The first queue is used to store at least one piece of second data from the second computing node. Each piece of second data is an output obtained by the second computing node by processing data by using the third sub-model.

1802: Process the first input data by using the first sub-model, to obtain a first intermediate output.

1803: Process the first input data by using the second sub-model, to obtain a second intermediate output, where the first intermediate output and the second intermediate output are used to determine a first gradient.

A feedforward process performed by the first computing node based on the input data is described in step 1802 and step 1803. For the student model (the first sub-model) for which the first computing node is responsible, the first input data may be processed by using the first sub-model, to obtain the first intermediate output. For the teacher model (the second sub-model) for which the first computing node is responsible, the first input data may be processed by using the second sub-model, to obtain the second intermediate output.

In a possible implementation, the first sub-model and the second sub-model each may include a plurality of network layers (for example, a plurality of transformer layers), the first intermediate output may be an output of a last layer (namely, a network layer closest to an output layer in the student model) in the first sub-model, and correspondingly, the second intermediate output may be an output of a last layer (namely, a network layer closest to an output layer in the teacher model) in the second sub-model.

For the $n^{th}$ computing node, it is assumed that a parameter that can be learned in a small model (a partial model, of the student model, for which the $n^{th}$ computing node is responsible) for which the $n^{th}$ computing node is responsible is $w_n$, and a training objective function of the $n^{th}$ computing node is to minimize a distance $L^{(n)}$ between a feature of a compressed small model and a feature of an uncompressed large model (a partial model, of the teacher model, for which the $n^{th}$ computing node is responsible). For the $n^{th}$ computing node, a common feature of constructing a loss function is a final output of the computing node. If $f_{ln+1-1}$ and $\hat{f}_{ln+1-1}$ are respectively outputs of the $n^{th}$ computing node before and after model compression, the training objective function of the $n^{th}$ computing node may be expressed as follows:

$$\min_{w_n} L^{(n)} = \sum_{l \in [l_n, l_{n+1})} \left\| \hat{f}_{l_{n+1}-1} - f_{l_{n+1}-1} \right\|^2$$

In a possible implementation, the first intermediate output may alternatively be an output of each layer in the first sub-model, and correspondingly, the second intermediate output may be an output of each layer in the second sub-model. For a compression method (for example, model quantization or pruning in a width direction) in which a quantity of network layers (for example, transformer layers) is not changed, a common feature of constructing a loss function is an output of each network layer (for example, transformer layer) in each computing node. If $f_l$ and $\hat{f}_l$ are respectively outputs of an $l^{th}$ transformer layer before and after compression, the objective function of the $n^{th}$ computing node may be expressed as follows:

$$\min_{w_n} L^{(n)} = \sum_{l \in [l_n, l_{n+1})} \left\| \hat{f}_l - f_l \right\|^2$$

In this embodiment of this application, after the first intermediate output and the second intermediate output are obtained, a loss may be constructed based on the first intermediate output and the second intermediate output, and the first gradient is determined based on the loss. The first gradient may be used to update the first sub-model.

It should be understood that in a possible implementation, the first sub-model does not include the output layer in the student model, and correspondingly, the second sub-model does not include the output layer in the teacher model. When the first sub-model includes the output layer in the student model, and the second sub-model includes the output layer in the teacher model, the first computing node does not need to wait for gradient back propagation of a next level of computing node (the first computing node is a last level of computing node).

1804: Distill the first sub-model based on the first gradient, to obtain an updated first sub-model.

In an existing gradient back propagation process of knowledge distillation, update is gradually performed from an output layer to an input layer, and update of a previous level of network layer depends on completion of update of a current level of network layer. Therefore, when update of a network layer of one or more current levels of computing nodes is not completed, a large quantity of computing nodes are in a resource idle state. For example, a computing node 1 is responsible for distillation of a network layer 1, a computing node 2 is responsible for distillation of a network layer 2, and the network layer 2 is connected after the network layer 1. In a feedforward process, an output of the network layer 1 is used as an input of the network layer 2. During gradient back propagation, the network layer 1 is updated only after the network layer 2 is updated. That is, before the computing node 2 completes update of the network layer 2, the computing node 1 cannot update the network layer 1. In this embodiment of this application, a gradient back propagation process of each computing node is internally performed, there is no dependency on one next level of computing node (or N next levels of computing nodes, where N is greater than 1) to complete distillation of a network layer for which each computing node is responsible, and a gradient calculated by each computing node is not back-propagated to a previous level of computing node (for the first gradient obtained by the first computing node, the first gradient is used only to update the first sub-model, and may not be back-propagated to the second computing node, that is, is not used when the second computing node distills a network layer for which the second computing node is responsible), to achieve higher utilization of computing resources, and accelerate a distillation process.

It should be understood that in the asynchronous parallel training process described above, an error generated by the student model is propagated layer by layer (propagated during feedforward). During parallel training, if training of a previous segment is not completed, a current segment is affected by the previous segment. In addition, a queue is used, so that computing nodes may not need to wait for each other. However, non-sequential calculation brings a larger error to the model than common pipeline parallel training. Therefore, in an implementation, the teacher model may be used to mitigate error accumulation caused by the student model. Specifically, when distillation training starts, input data obtained by the computing node may be an output of a teacher model of a previous level of connected computing node (when distillation starts, an error of the student model is excessively large, and an input to the teacher model is more accurate. In this embodiment of this application, the error is propagated layer by layer, and therefore a convergence speed of the student model is very low. At the beginning, the output of the teacher model is used as an input, so that error propagation during feedforward can be reduced, and the convergence speed of the student model can be increased). As the training proceeds, a change is gradually made to use a sample of an output queue of the student model as an input, to maintain consistency with an inference phase (only the student model is used).

In specific implementation, a convex combination between a queue $f_{l_n}^t$ corresponding to the teacher model and a queue $\hat{f}_{l_n}^t$ corresponding to the student model may be used as an input of the $(n+1)^{th}$ computing node, and a coefficient $\lambda$ is controlled to change from 1 to 0 in a training process. This may be expressed as follows:

$$\tilde{f}_{l_n}^t = (1 - \lambda)\hat{f}_{l_n}^t + \lambda f_{l_n}^t$$

Many attenuation functions may be used to change $\lambda$ from 1 to 0 in the training process. It is assumed that a total quantity of iterations of training is $T_0$, and common linear attenuation may be expressed as follows:

$$\lambda_t = max(1 - t/T_0, 0)$$

An embodiment of this application provides a model distillation method. The method is applied to a first computing node. A first sub-model and a second sub-model are deployed on the first computing node. The first sub-model is a partial model of a student model. The second sub-model is a partial model of a teacher model, and the teacher model further includes a third sub-model connected to the second sub-model. The first computing node is communicatively connected to a second computing node. The third sub-model is deployed on the second computing node. The method includes: obtaining first input data from the second computing node, where the first input data is output data of the third sub-model; processing the first input data by using the first sub-model, to obtain a first intermediate output; processing the first input data by using the second sub-model, to obtain a second intermediate output, where the first intermediate output and the second intermediate output are used to determine a first gradient; and distilling the first sub-model based on the first gradient, to obtain an updated first sub-model. When distillation training starts, input data obtained by the computing node may be an output of a teacher model of a previous level of connected computing node (when distillation starts, an error of the student model is excessively large, and an input to the teacher model is more accurate. In this embodiment of this application, the error is propagated layer by layer, and therefore a convergence speed of the student model is very low. At the beginning, the output of the teacher model is used as an input, so that error propagation during feedforward can be reduced, and the convergence speed of the student model can be increased).

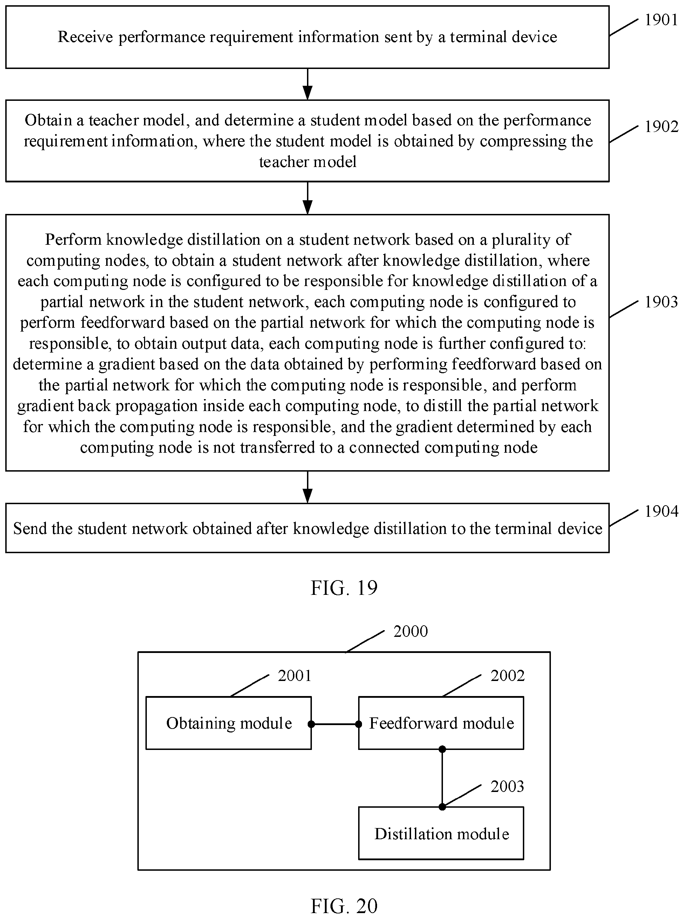

FIG. 19 is a schematic diagram of an embodiment of a model distillation method according to an embodiment of this application. As shown in FIG. 19, the model distillation method provided in this embodiment of this application includes the following steps.

1901: Receive performance requirement information sent by a terminal device.

In this embodiment of this application, the terminal device may send the performance requirement information to a device on a cloud side. The performance requirement information may include at least one of the following: a precision requirement, a latency requirement, or a model compression ratio requirement.

In some scenarios, when the terminal device needs to obtain, from the device on the cloud side, a model used for inference, the terminal device may send a model obtaining request to the device on the cloud side. The model obtaining request may include the performance requirement information. Correspondingly, the device on the cloud side may receive the performance requirement information sent by the terminal device, and determine, based on the performance requirement information, a student model suitable for the terminal device. When there is a high precision requirement, the student model may have a large size (for example, there are a large quantity of parameters or a large amount of storage space is required), to provide a model with very high performance. When there is a high latency requirement, the student model may have a small size, to provide a model that can implement quick derivation. When there is a high model compression ratio (a ratio of a size of a model before scaling to a size of a model after scaling) requirement, the student model may have a large size, to provide a model with a large model compression ratio.

1902: Obtain a teacher model, and determine a student model based on the performance requirement information, where the student model is obtained by compressing the teacher model.

1903: Perform knowledge distillation on a student network based on a plurality of computing nodes, to obtain a student network after knowledge distillation, where each computing node is configured to be responsible for knowledge distillation of a partial network in the student network, each computing node is configured to perform feedforward based on the partial network for which the computing node is responsible, to obtain output data, each computing node is further configured to: determine a gradient based on the data obtained by performing feedforward based on the partial network for which the computing node is responsible, and perform gradient back propagation inside each computing node, to distill the partial network for which the computing node is responsible, and the gradient determined by each computing node is not transferred to a connected computing node.

In a possible implementation, the student model is a transformer model, and a partial model includes one or more transformer layers.

In a possible implementation, a first in first out queue is further deployed between the plurality of computing nodes connected in series, and the output data is transferred to the first in first out queue between the connected computing nodes, so that the connected computing nodes obtain the output data from the first in first out queue.

For descriptions of step 1903, refer to the model distillation method provided in the embodiments corresponding to FIG. 11 and FIG. 18. Details are not described herein.

1904: Send the student network obtained after knowledge distillation to the terminal device.

In this embodiment of this application, after determining the student network obtained after knowledge distillation, the device on the cloud side may send the determined student network obtained after knowledge distillation to the terminal device, and the terminal device may perform inference based on the received student model. It should be noted that the terminal device may further perform further model compression processing on the received student network obtained after knowledge distillation, for example, may perform the model distillation method provided in the embodiments corresponding to FIG. 11 and FIG. 18. This is not limited herein.

In the foregoing manner, the device on the cloud side may determine, based on the performance requirement information from the terminal device, a student model suitable for a requirement of the terminal device.

Based on the embodiments corresponding to FIG. 1 to FIG. 19, a related device configured to implement the foregoing solutions in embodiments of this application is further provided below, to better implement the solutions. Specifically, FIG. 20 is a schematic diagram of a structure of a model distillation apparatus 2000 according to an embodiment of this application. The model distillation apparatus 2000 may be a terminal device or a server. The apparatus may be applied to a first computing node. A first sub-model and a second sub-model are deployed on the first computing node. The first sub-model is a partial model of a student model, and the student model further includes a third sub-model connected to the first sub-model. The second sub-model is a partial model of a teacher model, and the teacher model further includes a fourth sub-model connected to the second sub-model. The first computing node is communicatively connected to a second computing node. The third sub-model and the fourth sub-model are deployed on the second computing node. The apparatus includes an obtaining module 2001, a feedforward module 2002, and a distillation module 2003.

The obtaining module 2001 is configured to obtain first input data and second input data from the second computing node. The first input data is output data of the third sub-model, and the second input data is output data processed by the fourth sub-model.

For specific descriptions of the obtaining module 2001, refer to the descriptions of step 1101 in the foregoing embodiment. Details are not described herein.

The feedforward module 2002 is configured to: process the first input data by using the first sub-model, to obtain a first intermediate output; and

process the second input data by using the second sub-model, to obtain a second intermediate output. The first intermediate output and the second intermediate output are used to determine a first gradient.

For specific descriptions of the feedforward module 2002, refer to the descriptions of step 1102 and step 1103 in the foregoing embodiment. Details are not described herein.

The distillation module 2003 is configured to distill the first sub-model based on the first gradient, to obtain an updated first sub-model.

For specific descriptions of the distillation module 2003, refer to the descriptions of step 1104 in the foregoing embodiment. Details are not described herein.

In a possible implementation, the student model and the teacher model are transformer models, and the first sub-model and the second sub-model each include one or more transformer layers.

In a possible implementation, the first sub-model does not include an output layer in the student model.

In a possible implementation, a storage resource required for storing the first sub-model is less than a storage resource required for storing the second sub-model.

In a possible implementation, the first gradient is used only to update the first sub-model.

In a possible implementation, the obtaining module 2001 is specifically configured to:

obtain the first input data from a first queue. The first queue is used to store at least one piece of first data from the second computing node. Each piece of first data is an output obtained by the second computing node by processing input data by using the third sub-model. The at least one piece of first data includes the first input data.

In a possible implementation, the first queue is a first in first out queue.

In a possible implementation, before the first sub-model is distilled based on the first gradient, the at least one piece of first data includes third input data, and the third input data is output data of the third sub-model; and the obtaining module 2001 is further configured to:

obtain the third input data from the first queue in response to obtaining the updated first sub-model. The third input data is used as input data in a feedforward process existing when model distillation is performed on the updated first sub-model.

In a possible implementation, the obtaining module 2001 is specifically configured to:

obtain the second input data from a second queue. The second queue is used to store at least one piece of second data from the second computing node. Each piece of second data is an output obtained by the second computing node by processing input data by using the fourth sub-model. The at least one piece of second data includes the second input data.

In a possible implementation, the first computing node is further communicatively connected to a third computing node, the student model further includes a fifth sub-model connected after the first sub-model, the first intermediate output is transferred to a third queue, the third queue is used to store the first intermediate output, so that the third computing node obtains the first intermediate output from the third queue, and the first intermediate output is used as input data in a feedforward process existing when model distillation is performed on the third sub-model.

This application provides a model distillation apparatus. The apparatus is applied to a first computing node. A first sub-model and a second sub-model are deployed on the first computing node. The first sub-model is a partial model of a student model, and the student model further includes a third sub-model connected to the first sub-model. The second sub-model is a partial model of a teacher model, and the teacher model further includes a fourth sub-model connected to the second sub-model. The first computing node is communicatively connected to a second computing node. The third sub-model and the fourth sub-model are deployed on the second computing node. The apparatus includes: an obtaining module, configured to obtain first input data and second input data from the second computing node, where the first input data is output data of the third sub-model, and the second input data is output data processed by the fourth sub-model; a feedforward module, configured to: process the first input data by using the first sub-model, to obtain a first intermediate output; and process the second input data by using the second sub-model, to obtain a second intermediate output, where the first intermediate output and the second intermediate output are used to determine a first gradient; and a distillation module, configured to distill the first sub-model based on the first gradient, to obtain an updated first sub-model. In this embodiment of this application, a gradient back propagation process of each computing node is internally performed, there is no dependency on one next level of computing node (or N next levels of computing nodes, where N is greater than 1) to complete distillation of a network layer for which each computing node is responsible, and a gradient calculated by each computing node is not back-propagated to a previous level of computing node (for the first gradient obtained by the first computing node, the first gradient is used only to update the first sub-model, and may not be back-propagated to the second computing node, that is, is not used when the second computing node distills a network layer for which the second computing node is responsible), to achieve higher utilization of computing resources, and accelerate a distillation process.

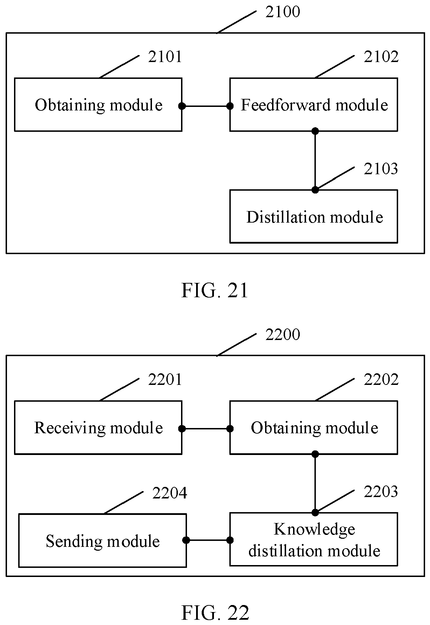

FIG. 21 is a schematic diagram of a structure of a model distillation apparatus 2100 according to an embodiment of this application. The model distillation apparatus 2100 may be a terminal device or a server. The apparatus may be applied to a first computing node. A first sub-model and a second sub-model are deployed on the first computing node. The first sub-model is a partial model of a student model. The second sub-model is a partial model of a teacher model, and the teacher model further includes a third sub-model connected to the second sub-model. The first computing node is communicatively connected to a second computing node. The third sub-model is deployed on the second computing node. The model distillation apparatus 2100 includes an obtaining module 2101, a feedforward module 2102, and a distillation module 2103.

The obtaining module 2101 is configured to obtain first input data from the second computing node. The first input data is output data of the third sub-model.

For specific descriptions of the obtaining module 2101, refer to the descriptions of step 1804 in the foregoing embodiment. Details are not described herein.

The feedforward module 2102 is configured to: process the first input data by using the first sub-model, to obtain a first intermediate output; and

process the first input data by using the second sub-model, to obtain a second intermediate output. The first intermediate output and the second intermediate output are used to determine a first gradient.

For specific descriptions of the feedforward module 2102, refer to the descriptions of step 1802 and step 1803 in the foregoing embodiment. Details are not described herein.

The distillation module 2103 is configured to distill the first sub-model based on the first gradient, to obtain an updated first sub-model.

For specific descriptions of the distillation module 2103, refer to the descriptions of step 1804 in the foregoing embodiment. Details are not described herein.

In a possible implementation, the student model and the teacher model are transformer models, and the first sub-model and the second sub-model each include one or more transformer layers.

In a possible implementation, the first loss is used only to update the first sub-model.

In a possible implementation, the obtaining module 2101 is specifically configured to:

obtain the first input data from a first queue. The first queue is used to store at least one piece of first data from the second computing node. Each piece of first data is an output obtained by the second computing node by processing data by using the third sub-model. The at least one piece of first data includes the first input data.

In a possible implementation, the first queue is a first in first out queue.

In a possible implementation, before the first sub-model is distilled based on the first gradient, the at least one piece of first data includes second input data, and the second input data is output data of the third sub-model; and the obtaining module 2101 is further configured to:

obtain the second input data from the first queue in response to obtaining the updated first sub-model. The second input data is used as input data in a feedforward process existing when model distillation is performed on the updated first sub-model.

In a possible implementation, a storage resource required for storing the first sub-model is less than a storage resource required for storing the second sub-model.

An embodiment of this application provides a model distillation apparatus, applied to a first computing node. A first sub-model and a second sub-model are deployed on the first computing node. The first sub-model is a partial model of a student model. The second sub-model is a partial model of a teacher model, and the teacher model further includes a third sub-model connected to the second sub-model. The first computing node is communicatively connected to a second computing node. The third sub-model is deployed on the second computing node. The apparatus includes: an obtaining module, configured to obtain first input data from the second computing node, where the first input data is output data of the third sub-model; a feedforward module, configured to: process the first input data by using the first sub-model, to obtain a first intermediate output; and process the first input data by using the second sub-model, to obtain a second intermediate output, where the first intermediate output and the second intermediate output are used to determine a first gradient; and a distillation module, configured to distill the first sub-model based on the first gradient, to obtain an updated first sub-model. When distillation training starts, input data obtained by the computing node may be an output of a teacher model of a previous level of connected computing node (when distillation starts, an error of the student model is excessively large, and an input to the teacher model is more accurate. In this embodiment of this application, the error is propagated layer by layer, and therefore a convergence speed of the student model is very low. At the beginning, the output of the teacher model is used as an input, so that error propagation during feedforward can be reduced, and the convergence speed of the student model can be increased).

FIG. 22 is a schematic diagram of an embodiment of a model distillation apparatus according to an embodiment of this application. As shown in FIG. 22, the model distillation apparatus 2200 provided in this embodiment of this application includes a receiving module 2201, an obtaining module 2202, a knowledge distillation module 2203, and a sending module 2204.

The receiving module 2201 is configured to receive performance requirement information sent by a terminal device.

For specific descriptions of the receiving module 2201, refer to the descriptions of step 1901 in the foregoing embodiment. Details are not described herein.

The obtaining module 2202 is configured to: obtain a teacher model, and determine a student model based on the performance requirement information. The student model is obtained by compressing the teacher model.

For specific descriptions of the obtaining module 2202, refer to the descriptions of step 1902 in the foregoing embodiment. Details are not described herein.

The knowledge distillation module 2203 is configured to perform knowledge distillation on a student network based on a plurality of computing nodes, to obtain a student network after knowledge distillation. Each computing node is configured to be responsible for knowledge distillation of a partial network in the student network. Each computing node is configured to perform feedforward based on the partial network for which the computing node is responsible, to obtain output data. Each computing node is further configured to: determine a gradient based on the data obtained by performing feedforward based on the partial network for which the computing node is responsible, and perform gradient back propagation inside each computing node, to distill the partial network for which the computing node is responsible. The gradient determined by each computing node is not transferred to a connected computing node.

For specific descriptions of the knowledge distillation module 2203, refer to the descriptions of step 1903 in the foregoing embodiment. Details are not described herein.

In a possible implementation, the student model is a transformer model, and a partial model includes one or more transformer layers.

In a possible implementation, a first in first out queue is further deployed between the plurality of computing nodes connected in series, and the output data is transferred to the first in first out queue between the connected computing nodes, so that the connected computing nodes obtain the output data from the first in first out queue.

The sending module 2204 is configured to send the student network obtained after knowledge distillation to the terminal device.

For specific descriptions of the sending module 2204, refer to the descriptions of step 1904 in the foregoing embodiment. Details are not described herein.

In the foregoing manner, a device on a cloud side may determine, based on the performance requirement information from the terminal device, a student model suitable for a requirement of the terminal device.

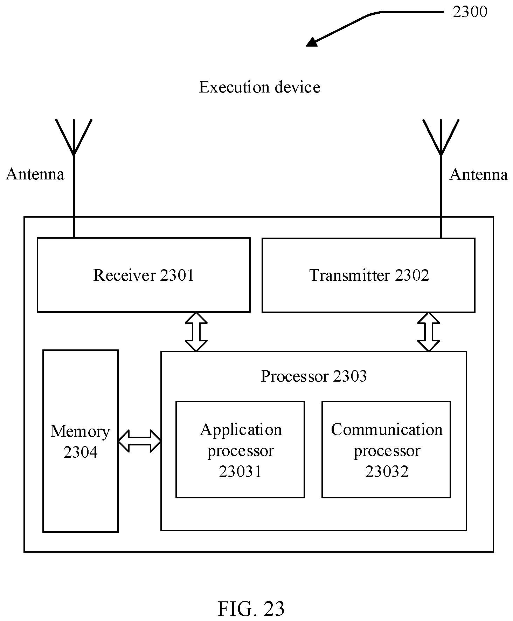

An execution device provided in an embodiment of this application is described below. FIG. 23 is a schematic diagram of a structure of an execution device according to an embodiment of this application. The execution device 2300 may be specifically represented as a virtual reality VR device, a mobile phone, a tablet computer, a notebook computer, a smart wearable device, a monitoring data processing device, a server, or the like. This is not limited herein. Specifically, the execution device 2300 includes a receiver 2301, a transmitter 2302, a processor 2303, and a memory 2304 (there may be one or more processors 2303 in the execution device 2300, and one processor is used as an example in FIG. 23). The processor 2303 may include an application processor 23031 and a communication processor 23032. In some embodiments of this application, the receiver 2301, the transmitter 2302, the processor 2303, and the memory 2304 may be connected by using a bus or in another manner.

The memory 2304 may include a read-only memory and a random access memory, and provide instructions and data to the processor 2303. Apart of the memory 2304 may further include a nonvolatile random access memory (nonvolatile random access memory, NVRAM). The memory 2304 stores a processor and operation instructions, an executable module or a data structure, a subset thereof, or an extended set thereof. The operation instructions may include various operation instructions for implementing various operations.

The processor 2303 controls an operation of the execution device. In a specific application, components of the execution device are coupled to each other by using a bus system. In addition to a data bus, the bus system may further include a power bus, a control bus, a status signal bus, and the like. However, for clear description, various types of buses in the figure are marked as the bus system.

The method disclosed in the foregoing embodiments of this application may be applied to the processor 2303, or may be implemented by the processor 2303. The processor 2303 may be an integrated circuit chip and has a signal processing capability. In an implementation process, the steps of the foregoing method may be implemented by using an integrated logic circuit of hardware in the processor 2303, or instructions in a form of software. The processor 2303 may be a general-purpose processor, a digital signal processor (digital signal processing, DSP), a microprocessor, or a microcontroller, and may further include an application-specific integrated circuit (application-specific integrated circuit, ASIC), a field programmable gate array (field programmable gate array, FPGA) or another programmable logic device, a discrete gate or transistor logic device, or a discrete hardware assembly. The processor 2303 may implement or perform the methods, steps, and logical block diagrams that are disclosed in embodiments of this application. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of a hardware module in a decoding processor and a software module. The software module may be located in a mature storage medium in the art, for example, a random access memory, a flash memory, a read-only memory, a programmable read-only memory, or an electrically erasable programmable memory. The storage medium is located in the memory 2304, and the processor 2303 reads information in the memory 2304, and completes the steps of the foregoing methods in combination with the hardware in the processor 2303.

The receiver 2301 may be configured to: receive input digital or character information, and generate a signal input related to a setting related to and function control of the execution device. The transmitter 2302 may be configured to output digital or character information through a first interface. The transmitter 2302 may be further configured to send an instruction to a disk pack through the first interface, to modify data in the disk pack. The transmitter 2302 may further include a display device, for example, a display.

In this embodiment of this application, in a case, the processor 2303 is configured to perform the model distillation methods in FIG. 11 to FIG. 19, to obtain a student model after knowledge distillation.

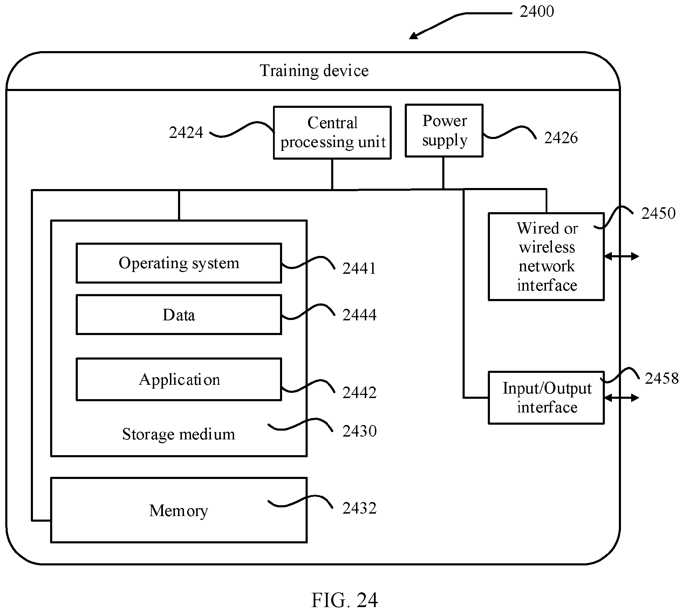

An embodiment of this application further provides a training device. FIG. 24 is a schematic diagram of a structure of a training device according to an embodiment of this application. Specifically, the training device 2400 is implemented by one or more servers. The training device 2400 may differ greatly based on different configurations or performance, and may include one or more central processing units (central processing units, CPUs) 2424 (for example, one or more processors), a memory 2432, and one or more storage media 2430 (for example, one or more mass storage devices) for storing an application 2442 or data 2444. The memory 2432 and the storage medium 2430 may be a temporary storage or persistent storage. A program stored in the storage medium 2430 may include one or more modules (not shown in the figure), and each module may include a series of instruction operations on the training device. Further, the central processing unit 2424 may be configured to: communicate with the storage medium 2430, and perform the series of instruction operations in the storage medium 2430 on the training device 2400.

The training device 2400 may further include one or more power supplies 2426, one or more wired or wireless network interfaces 2450, and one or more input/output interfaces 2458, or one or more operating systems 2441, for example, Windows Server™, Mac OS X™, Unix™, Linux™, and FreeBSD™.

In this embodiment of this application, the central processing unit 2424 is configured to perform the model distillation methods in FIG. 11 to FIG. 19.

An embodiment of this application further provides a computer program product. When the computer program product runs on a computer, the computer is enabled to perform the steps performed by the execution device, or the computer is enabled to perform the steps performed by the training device.

An embodiment of this application further provides a computer-readable storage medium. The computer-readable storage medium stores a program used for signal processing. When the program runs on a computer, the computer is enabled to perform the steps performed by the execution device, or the computer is enabled to perform the steps performed by the training device.

The execution device, the training device, or the terminal device in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that a chip in the execution device performs the data processing method described in the foregoing embodiments, or a chip in the training device performs the data processing method described in the foregoing embodiments. Optionally, the storage unit is a storage unit in the chip, for example, a register or a cache. The storage unit may alternatively be a storage unit that is in a wireless access device and that is outside the chip, for example, a read-only memory (read-only memory, ROM) or another type of static storage device that can store static information and instructions, or a random access memory (random access memory, RAM).

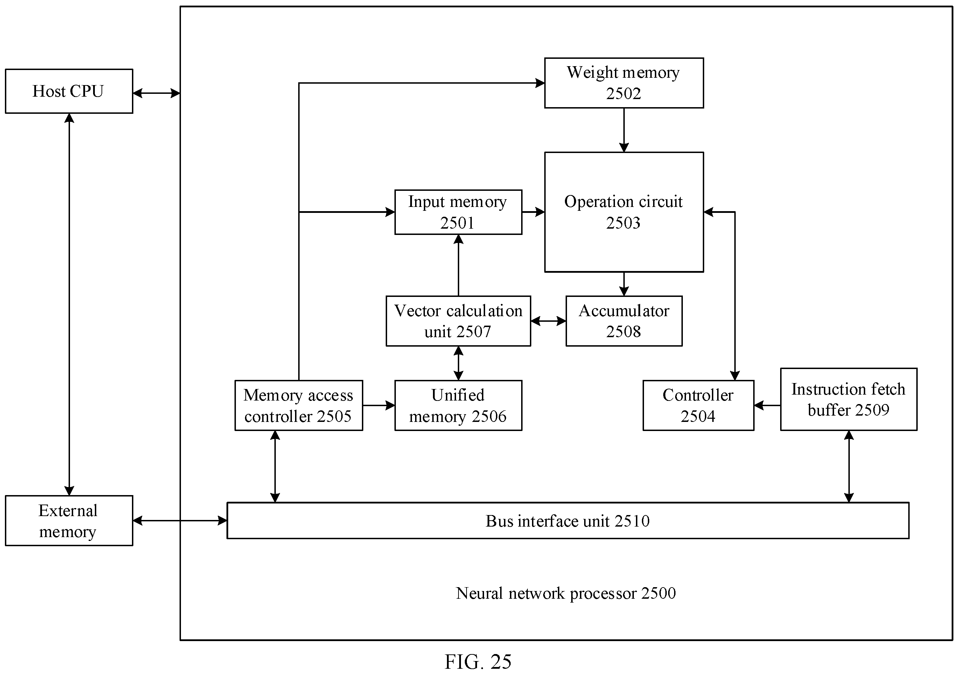

Specifically, FIG. 25 is a schematic diagram of a structure of a chip according to an embodiment of this application. The chip may be represented as a neural-network processing unit NPU 2500. The NPU 2500 is connected to a host CPU (Host CPU) as a coprocessor, and the host CPU allocates a task. A core part of the NPU is an operation circuit 2503. The operation circuit 2503 is controlled by a controller 2504 to extract matrix data in a memory and perform a multiplication operation.

In some implementations, the operation circuit 2503 internally includes a plurality of process engines (Process Engine, PE). In some implementations, the operation circuit 2503 is a two-dimensional systolic array. The operation circuit 2503 may alternatively be a one-dimensional systolic array or another electronic circuit that can perform mathematical operations such as multiplication and addition. In some implementations, the operation circuit 2503 is a general-purpose matrix processor.

For example, it is assumed that there is an input matrix A, a weight matrix B, and an output matrix C. The operation circuit fetches data corresponding to the matrix B from a weight memory 2502, and buffers the data on each PE in the operation circuit. The operation circuit fetches data corresponding to the matrix A from an input memory 2501, performs a matrix operation on the matrix B, and stores an obtained partial result or an obtained final result of the matrix in an accumulator (accumulator) 2508.

A unified memory 2506 is configured to store input data and output data. Weight data is transferred to the weight memory 2502 by using a direct memory access controller (Direct Memory Access Controller, DMAC) 2505. The input data is also transferred to the unified memory 2506 by using the DMAC.

A BIU is a bus interface unit, namely, a bus interface unit 2510, and is used for interaction between an AXI bus and the DMAC and an instruction fetch buffer (Instruction Fetch Buffer, IFB) 2509.

The bus interface unit (Bus Interface Unit, BIU for short) 2510 is used by the instruction fetch buffer 2509 to obtain an instruction from an external memory, and is further used by the direct memory access controller 2505 to obtain original data of the input matrix A or the weight matrix B from the external memory.

The DMAC is mainly configured to transfer the input data in the external memory DDR to the unified memory 2506, transfer the weight data to the weight memory 2502, or transfer the input data to the input memory 2501.

A vector calculation unit 2507 includes a plurality of operation processing units, performs further processing such as vector multiplication, vector addition, an exponential operation, a logarithmic operation, or value comparison on an output of the operation circuit if necessary, and is mainly configured to perform network calculation at a non-convolutional/fully connected layer in a neural network, for example, batch normalization (batch normalization), pixel wise summation, and upsampling a feature map.

In some implementations, the vector calculation unit 2507 can store a processed output vector in the unified memory 2506. For example, the vector calculation unit 2507 may apply a linear function or a nonlinear function to the output of the operation circuit 2503, for example, perform linear interpolation on a feature map extracted from a convolutional layer, and for another example, obtain a vector of an accumulated value to generate an activation value. In some implementations, the vector calculation unit 2507 generates a normalized value, a value obtained after pixel-wise summation, or a combination thereof. In some implementations, the processed output vector can be used as an activation input of the operation circuit 2503, for example, used at a subsequent layer in the neural network.

The instruction fetch buffer (instruction fetch buffer) 2509 connected to the controller 2504 is configured to store instructions used by the controller 2504.

All of the unified memory 2506, the input memory 2501, the weight memory 2502, and the instruction fetch buffer 2509 are on-chip memories. The external memory is private to a hardware architecture of the NPU.

Any processor described above may be a general-purpose central processing unit, a microprocessor, an ASIC, or one or more integrated circuits for controlling the program execution.

In addition, it should be noted that the described apparatus embodiment is merely an example. The units described as separate parts may or may not be physically separate, and parts displayed as units may or may not be physical units, may be located at one position, or may be distributed on a plurality of network units. Some or all of the modules may be selected based on actual requirements to achieve the objectives of the solutions of embodiments. In addition, in the accompanying drawings of the apparatus embodiments provided in this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by software in addition to necessary universal hardware, or certainly, may be implemented by dedicated hardware, including a dedicated integrated circuit, a dedicated CPU, a dedicated memory, a dedicated component, and the like. Usually, any function performed by a computer program can be easily implemented by using corresponding hardware. In addition, a specific hardware structure used to achieve a same function may be in various forms, for example, in a form of an analog circuit, a digital circuit, or a dedicated circuit. However, for this application, software program implementation is a better implementation in most cases. Based on such an understanding, the technical solutions in this application essentially, or the part contributing to the conventional technology may be implemented in a form of a software product. The computer software product is stored in a readable storage medium, for example, a floppy disk of a computer, a USB flash drive, a removable hard disk, a ROM, a RAM, a magnetic disk, or an optical disc, and includes several instructions for instructing a computer device (which may be a personal computer, a training device, a network device, or the like) to perform the methods in embodiments of this application.

All or some of the foregoing embodiments may be implemented by using software, hardware, firmware, or any combination thereof. When the foregoing embodiments are implemented by using software, all or some of the foregoing embodiments may be implemented in a form of a computer program product.

The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another-computer readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored in a computer, or a data storage device, for example, a training device or a data center, into which one or more usable media are integrated. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

**Claims**

1. A model distillation method, wherein the method is applied to a first computing node, a first sub-model and a second sub-model are deployed on the first computing node, the first sub-model is a partial model of a student model, the student model further comprises a third sub-model connected to the first sub-model, the second sub-model is a partial model of a teacher model, the teacher model further comprises a fourth sub-model connected to the second sub-model, the first computing node is communicatively connected to a second computing node, the third sub-model and the fourth sub-model are deployed on the second computing node, and the method comprises:

   obtaining first input data and second input data from the second computing node, wherein the first input data is output data of the third sub-model, and the second input data is output data processed by the fourth sub-model;
   processing the first input data by using the first sub-model, to obtain a first intermediate output;
   processing the second input data by using the second sub-model, to obtain a second intermediate output, wherein the first intermediate output and the second intermediate output are used to determine a first gradient; and
   distilling the first sub-model based on the first gradient, to obtain an updated first sub-model.

2. The method according to claim 1, wherein the student model and the teacher model are transformer models, and the first sub-model and the second sub-model each comprise one or more transformer layers.

3. The method according to claim 1 or 2, wherein the first sub-model does not comprise an output layer in the student model.

4. The method according to any one of claims 1 to 3, wherein the obtaining first input data from the second computing node comprises:
obtaining the first input data from a first queue, wherein the first queue is used to store at least one piece of first data from the second computing node, each piece of first data is output data obtained by the second computing node by processing input data by using the third sub-model, and the at least one piece of first data comprises the first input data.

5. The method according to claim 4, wherein the first queue is a first in first out queue.

6. The method according to claim 4 or 5, wherein before the distilling the first sub-model based on the first gradient, the at least one piece of first data comprises third input data, and the third input data is output data of the third sub-model; and after the distilling the first sub-model based on the first gradient, the method further comprises:
obtaining the third input data from the first queue in response to obtaining the updated first sub-model, wherein the third input data is used as input data in a feedforward process existing when model distillation is performed on the updated first sub-model.

7. The method according to any one of claims 1 to 6, wherein the obtaining second input data from the second computing node comprises:
obtaining the second input data from a second queue, wherein the second queue is used to store at least one piece of second data from the second computing node, each piece of second data is an output obtained by the second computing node by processing input data by using the fourth sub-model, and the at least one piece of second data comprises the second input data.

8. The method according to any one of claims 1 to 7, wherein the first computing node is further communicatively connected to a third computing node, the student model further comprises a fifth sub-model connected after the first sub-model, the first intermediate output is transferred to a third queue, the third queue is used to store the first intermediate output, so that the third computing node obtains the first intermediate output from the third queue, and the first intermediate output is used as input data in a feedforward process existing when model distillation is performed on the third sub-model.

9. A model distillation method, wherein the method is applied to a first computing node, a first sub-model and a second sub-model are deployed on the first computing node, the first sub-model is a partial model of a student model, the second sub-model is a partial model of a teacher model, the teacher model further comprises a third sub-model connected to the second sub-model, the first computing node is communicatively connected to a second computing node, the third sub-model is deployed on the second computing node, and the method comprises:

obtaining first input data from the second computing node, wherein the first input data is output data of the third sub-model;
processing the first input data by using the first sub-model, to obtain a first intermediate output;
processing the first input data by using the second sub-model, to obtain a second intermediate output, wherein the first intermediate output and the second intermediate output are used to determine a first gradient; and
distilling the first sub-model based on the first gradient, to obtain an updated first sub-model.

10. The method according to claim 9, wherein the student model and the teacher model are transformer models, and the first sub-model and the second sub-model each comprise one or more transformer layers.

11. The method according to claim 9 or 10, wherein the obtaining first input data from the second computing node comprises:
obtaining the first input data from a first queue, wherein the first queue is used to store at least one piece of first data from the second computing node, each piece of first data is an output obtained by the second computing node by processing data by using the third sub-model, and the at least one piece of first data comprises the first input data.

12. The method according to claim 11, wherein before the distilling the first sub-model based on the first gradient, the at least one piece of first data comprises second input data, and the second input data is output data of the third sub-model; and after the distilling the first sub-model based on the first gradient, the method further comprises:

obtaining the second input data from the first queue in response to obtaining the updated first sub-model, wherein the second input data is used as input data in a feedforward process existing when model distillation is performed on the updated first sub-model.

13. A model distillation apparatus, wherein the apparatus is applied to a first computing node, a first sub-model and a second sub-model are deployed on the first computing node, the first sub-model is a partial model of a student model, the student model further comprises a third sub-model connected to the first sub-model, the second sub-model is a partial model of a teacher model, the teacher model further comprises a fourth sub-model connected to the second sub-model, the first computing node is communicatively connected to a second computing node, the third sub-model and the fourth sub-model are deployed on the second computing node, and the apparatus comprises:

an obtaining module, configured to obtain first input data and second input data from the second computing node, wherein the first input data is output data of the third sub-model, and the second input data is output data processed by the fourth sub-model;
a feedforward module, configured to: process the first input data by using the first sub-model, to obtain a first intermediate output; and
process the second input data by using the second sub-model, to obtain a second intermediate output, wherein the first intermediate output and the second intermediate output are used to determine a first gradient; and
a distillation module, configured to distill the first sub-model based on the first gradient, to obtain an updated first sub-model.

14. The apparatus according to claim 13, wherein the student model and the teacher model are transformer models, and the first sub-model and the second sub-model each comprise one or more transformer layers.

15. The apparatus according to claim 13 or 14, wherein the first sub-model does not comprise an output layer in the student model.

16. The apparatus according to any one of claims 13 to 15, wherein the obtaining module is specifically configured to: obtain the first input data from a first queue, wherein the first queue is used to store at least one piece of first data from the second computing node, each piece of first data is output data obtained by the second computing node by processing input data by using the third sub-model, and the at least one piece of first data comprises the first input data.

17. The apparatus according to claim 16, wherein the first queue is a first in first out queue.

18. The apparatus according to claim 16 or 17, wherein before the first sub-model is distilled based on the first gradient, the at least one piece of first data comprises third input data, and the third input data is output data of the third sub-model; and the obtaining module is further configured to:
obtain the third input data from the first queue in response to obtaining the updated first sub-model, wherein the third input data is used as input data in a feedforward process existing when model distillation is performed on the updated first sub-model.

19. The apparatus according to any one of claims 13 to 18, wherein the obtaining module is specifically configured to: obtain the second input data from a second queue, wherein the second queue is used to store at least one piece of second data from the second computing node, each piece of second data is an output obtained by the second computing node by processing input data by using the fourth sub-model, and the at least one piece of second data comprises the second input data.

20. A model distillation apparatus, applied to a first computing node, wherein a first sub-model and a second sub-model are deployed on the first computing node, the first sub-model is a partial model of a student model, the second sub-model is a partial model of a teacher model, the teacher model further comprises a third sub-model connected to the second sub-model, the first computing node is communicatively connected to a second computing node, the third sub-model is deployed on the second computing node, and the apparatus comprises:

an obtaining module, configured to obtain first input data from the second computing node, wherein the first input data is output data of the third sub-model;
a feedforward module, configured to: process the first input data by using the first sub-model, to obtain a first intermediate output; and
process the first input data by using the second sub-model, to obtain a second intermediate output, wherein the first intermediate output and the second intermediate output are used to determine a first gradient; and a distillation module, configured to distill the first sub-model based on the first gradient, to obtain an updated first sub-model.

21. The apparatus according to claim 20, wherein the student model and the teacher model are transformer models, and the first sub-model and the second sub-model each comprise one or more transformer layers.

22. The apparatus according to claim 20 or 21, wherein the obtaining module is specifically configured to:
obtain the first input data from a first queue, wherein the first queue is used to store at least one piece of first data from the second computing node, each piece of first data is an output obtained by the second computing node by processing data by using the third sub-model, and the at least one piece of first data comprises the first input data.

23. The apparatus according to claim 22, wherein before the first sub-model is distilled based on the first gradient, the at least one piece of first data comprises second input data, and the second input data is output data of the third sub-model; and the obtaining module is further configured to:
after the first sub-model is distilled based on the first gradient, obtain the second input data from the first queue in response to obtaining the updated first sub-model, wherein the second input data is used as input data in a feedforward process existing when model distillation is performed on the updated first sub-model.

24. A model distillation apparatus, wherein the apparatus comprises a memory and a processor, the memory stores code, and the processor is configured to: obtain the code, and perform the method according to any one of claims 1 to 12.

25. A computer storage medium, wherein the computer storage medium stores one or more instructions, and when the instructions are executed by one or more computers, the one or more computers are enabled to implement the method according to any one of claims 1 to 12.

26. A computer program product comprising instructions, wherein when the computer program product runs on a computer, the computer is enabled to perform the method according to any one of claims 1 to 12.

FIG. 1

Interaction interface

Neural network compression request

Compression result (target neural network)

...

Memory

Processor

Data training/Machine learning/Deep learning

Search/Inference/ Decision-making

...

Neural network compression device (server)

13:21

User

User equipment

FIG. 2

FIG. 3

EP 4 379 603 A1

EP 4 379 603 A1

Basic model

| Input | → | Transformer model | → | Output |

A hardware constraint, for example, a calculation amount, is provided

Model compression service

Compressed model

| Input | → | Transformer model | → | Output |

FIG. 4

Computing node cluster

| Computing node 1 | → | Computing node 2 | → | ... | → | Computing node N |

FIG. 5

FIG. 6

FIG. 7

FIG. 8

FIG. 9

FIG. 10

Obtain first input data and second input data from a second computing node, where the first input data is output data of a third sub-model, and the second input data is output data processed by a fourth sub-model    / 1101

Process the first input data by using a first sub-model, to obtain a first intermediate output    / 1102

Process the second input data by using a second sub-model, to obtain a second intermediate output, where the first intermediate output and the second intermediate output are used to determine a first gradient    / 1103

Distill the first sub-model based on the first gradient, to obtain an updated first sub-model    / 1104

FIG. 11

Neural network model

Transformer layer

...

Transformer layer

Embedding layer

FIG. 12

FIG. 13

FIG. 14

FIG. 15

FIG. 16

FIG. 17

Obtain first input data from a second computing node, where the first input data is an output obtained by the second computing node by processing second input data by using a third sub-model — 1801

Process the first input data by using a first sub-model, to obtain a first intermediate output — 1802

Process the first input data by using a second sub-model, to obtain a second intermediate output, where the first intermediate output and the second intermediate output are used to determine a first gradient — 1803

Distill the first sub-model based on the first gradient, to obtain an updated first sub-model — 1804

FIG. 18

```
┌─────────────────────────────────────────────────────────────────┐
│                                                                   │  ╱ 1901
│   Receive performance requirement information sent by a terminal device │
│                                                                   │
└─────────────────────────────────────────────────────────────────┘
                                 │
                                 ▼
┌─────────────────────────────────────────────────────────────────┐
│  Obtain a teacher model, and determine a student model based on the performance │  ╱ 1902
│  requirement information, where the student model is obtained by compressing the │
│                         teacher model                             │
└─────────────────────────────────────────────────────────────────┘
                                 │
                                 ▼
┌─────────────────────────────────────────────────────────────────┐
│   Perform knowledge distillation on a student network based on a plurality of │
│   computing nodes, to obtain a student network after knowledge distillation, where │
│   each computing node is configured to be responsible for knowledge distillation of a │
│   partial network in the student network, each computing node is configured to │  ╱ 1903
│   perform feedforward based on the partial network for which the computing node is │
│   responsible, to obtain output data, each computing node is further configured to: │
│   determine a gradient based on the data obtained by performing feedforward based on │
│   the partial network for which the computing node is responsible, and perform │
│   gradient back propagation inside each computing node, to distill the partial network │
│   for which the computing node is responsible, and the gradient determined by each │
│   computing node is not transferred to a connected computing node │
└─────────────────────────────────────────────────────────────────┘
                                 │
                                 ▼
┌─────────────────────────────────────────────────────────────────┐  ╱ 1904
│  Send the student network obtained after knowledge distillation to the terminal device │
└─────────────────────────────────────────────────────────────────┘
```

FIG. 19

FIG. 20

EP 4 379 603 A1

2100

2101
Obtaining module

2102
Feedforward module

2103
Distillation module

FIG. 21

2200

2201
Receiving module

2202
Obtaining module

2204
Sending module

2203
Knowledge distillation module

FIG. 22

60

2300

Execution device

Antenna

Antenna

| Receiver 2301 | Transmitter 2302 |

Processor 2303

| Memory 2304 | Application processor 23031 | Communication processor 23032 |

FIG. 23

FIG. 24

| | |
|---|---|
| Host CPU | |

Weight memory
2502

Input memory
2501

Operation circuit
2503

Vector calculation
unit 2507

Accumulator
2508

Memory access
controller 2505

Unified
memory 2506

Controller
2504

Instruction fetch
buffer 2509

External
memory

Bus interface unit 2510

Neural network processor 2500

FIG. 25

## INTERNATIONAL SEARCH REPORT

| International application No. |
|---|
| **PCT/CN2022/113602** |

| | |
|---|---|
| **A.** | **CLASSIFICATION OF SUBJECT MATTER** |
| | G06N 3/02(2006.01)i;  G06N 3/04(2006.01)i;  G06N 3/08(2006.01)i |

According to International Patent Classification (IPC) or to both national classification and IPC

| | |
|---|---|
| **B.** | **FIELDS SEARCHED** |

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

CNPAT, WPI, EPODOC, CNKI, IEEE: 蒸馏, 网络, 模型, 训练, 老师, 串联, 串连, 串接, 部分, 子, 学生, 学习, 压缩, 协同, 指导, 教练, 梯度, 内部, 人工智能, 神经网络, 并行, knowledge, distillation, KD, network, model, training, teacher, concatenate, part, child, sub, student, learning, compress, collaborate, guide, coach, gradient, internal, AI, NN

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| PX | CN 113850362 A (HUAWEI TECHNOLOGIES CO., LTD.) 28 December 2021 (2021-12-28) claims 1-26 | 1-26 |
| X | CN 111144574 A (BEIJING DIDI INFINITY TECHNOLOGY AND DEVELOPMENT CO., LTD.) 12 May 2020 (2020-05-12) description, paragraphs [0041]-[0128] | 1-26 |
| A | CN 111553479 A (DINGFU INTELLIGENT TECHNOLOGY CO., LTD.) 18 August 2020 (2020-08-18) entire document | 1-26 |
| A | CN 112257858 A (HUAWEI TECHNOLOGIES CO., LTD.) 22 January 2021 (2021-01-22) entire document | 1-26 |
| A | CN 108921294 A (ZHEJIANG UNIVERSITY) 30 November 2018 (2018-11-30) entire document | 1-26 |
| A | US 2020357384 A1 (SAMSUNG ELECTRONICS CO., LTD.) 12 November 2020 (2020-11-12) entire document | 1-26 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 November 2022** | **18 November 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

<div align="center">

**INTERNATIONAL SEARCH REPORT**
**Information on patent family members**

</div>

International application No.

**PCT/CN2022/113602**

| Patent document cited in search report | | | Publication date (day/month/year) | Patent family member(s) | | | Publication date (day/month/year) |
|---|---|---|---|---|---|---|---|
| CN | 113850362 | A | 28 December 2021 | None | | | |
| CN | 111144574 | A | 12 May 2020 | US | 2020349471 | A1 | 05 November 2020 |
| | | | | WO | 2020093356 | A1 | 14 May 2020 |
| CN | 111553479 | A | 18 August 2020 | None | | | |
| CN | 112257858 | A | 22 January 2021 | WO | 2022057776 | A1 | 24 March 2022 |
| CN | 108921294 | A | 30 November 2018 | None | | | |
| US | 2020357384 | A1 | 12 November 2020 | KR | 20200129639 | A | 18 November 2020 |

Form PCT/ISA/210 (patent family annex) (January 2015)

**REFERENCES CITED IN THE DESCRIPTION**

**Patent documents cited in the description**

- CN 202110962700